# EUROPEAN PATENT SPECIFICATION

(11) **EP 1 664 215 B1**
(45) Date of publication and mention of the grant of the patent: **04.11.2015**
(21) Application number: 04773442.1
(22) Date of filing: 21.09.2004
(51) Int. Cl.: C09D 11/00, B41J 2/01, B41M 5/00

(54) **RECORDING INK FOR INK-JET RECORDING APPARATUS, AND, INK CARTRIDGE, INK-JET RECORDING APPARATUS, INK-JET RECORDING PROCESS,AND RECORDED MATTER**
TINTE FÜR TINTENSTRAHLAUFZEICHNUNGSGERÄT SOWIE TINTENPATRONE, TINTENSTRAHLAUFZEICHNUNGSGERÄT, TINTENSTRAHLAUFZEICHNUNGSVERFAHREN SOWIE AUFZEICHNUNG
ENCRE D'IMPRESSION POUR APPAREIL D'IMPRESSION A JET D'ENCRE, AINSI QUE CARTOUCHE D'ENCRE, APPAREIL D'IMPRESSION A JET D'ENCRE, PROCEDE D'IMPRESSION A JET D'ENCRE ET ELEMENT IMPRIME

(30) Priority: 19.09.2003 JP 2003329166; 07.11.2003 JP 2003378165
(43) Date of publication of application: 07.06.2006
(73) Proprietor: Ricoh Company, Ltd., Tokyo 143-8555 (JP)
(72) Inventor: NAGAI, Kiyofumi, Machida-shi, Tokyo 194-0044 (JP); KOJIMA, Mariko, Komae-shi, Tokyo 201-0003 (JP); GOTOH, Akihiko, Atsugi-shi, Kanagawa 243-0018 (JP); BANNAI, Akiko, Tokyo 143-0015 (JP)
(74) Representative: Meissner, Bolte & Partner GbR
(86) International application number: PCT/JP2004/014130
(87) International publication number: WO 2005/028576

(56) References cited:
- EP-A- 1 243 625
- JP-A- 7 053 082
- JP-A- 2000 053 898
- JP-A- 2001 063 019
- JP-A- 2002 256 187
- JP-A- 2002 265 831
- JP-A- 2002 285 047
- JP-A- 2003 003 098

## Description

### Technical Field

The present invention relates to a recording ink adapted to ink-jet recording, and an ink cartridge, an ink-jet recording apparatus, an ink-jet recording process, and a recorded matter that utilize the recording ink respectively.

### Background Art

Recently, recording apparatuses such as ink-jet printers and plotters have been produced commercially that employ pigment-containing inks to improve printing property on plain paper. These recording apparatuses are partly of both-sides recordable.

However, the both-sides recordable apparatuses, while providing the advantage of paper saving, suffer from lower productivity rate compared to one-side recording; since inks with lower infiltrating property into paper are employed in order to obtain high image density with black inks, and also the second sides are printed after sufficient drying period following the first side printing so as to avoid the smears on printing, as a result the printing rates are typically low.

An ink-jet recording apparatus is proposed that is equipped with a drying unit such as a heater (Japanese Patent Application Laid-Open (JP-A) No. 2001-63019), since when inks with lower infiltrating property into paper are employed, the image quality comes to poor due to significant show through of inks. However, the construction in the proposed apparatus is complicated and additional electric power is required in accordance with the proposal.

Further, in conventional ink-jet printers, rollers pinch and convey recording paper sheets in general, and paper-discharging rollers are provided at the discharging site of recording paper in order to depress the paper wave and to discharge recorded paper smoothly. However, smears may be induced occasionally through rubbing the inks while insufficient fixing conditions, by the discharging rollers rolling on the recorded portions. Therefore, disc rollers with a sharp edge are usually employed in order to avoid the smears due to the rubbing, thereby the smears may be resolved because of the lower contacting area.

However, the disc rollers may damage easily the recording paper, in particular, the pressing with sharp edges tends to remain traces on recording paper having smooth surface such as coated paper. Further, more rollers are required in order to improve the conveying accuracy since the recording paper is conveyed through being pinched by rollers, therefore, the roller traces come to more significant.

In ink-jet recording, such a phenomena appears that the recording paper extends the size on forming images due to moisture in the ink, since the ink containing moisture is deposited on the recording paper; the phenomena is so-called cockling. The cockling causes waves on recording paper, and the waves induce fluctuation of sites between the nozzles of head and the surface of recording paper. When the cockling is enlarged, the recording paper may contact with the nozzles of head, thereby the nozzle surface may be smeared and the image quality may come to lower owing to the smears of recording paper itself, and also the sites of the applied ink droplets may be fluctuated due to the cockling. Accordingly, the recording paper should be conveyed while being depressed the wave of paper derived from the cockling so as to maintain the flatness of paper in order to achieve higher image quality.

For the purpose to solve such problems, an ink-jet recording apparatus is proposed in which an endless charging belt is equipped, and the recording paper is adsorbed electrostatically through charging the surface of the charging belt; the conveying unit is intended to maintain the flatness of recording paper and to exclude the roller traces thereby to form superior image quality. When the recording paper is conveyed by circulating the charging belt while electrostatically adsorbing the recording paper, the wave of recording paper may be prevented on the charging belt, and higher flatness may be maintained.

However, such a conveying unit as electrostatically adsorbing the recording paper presents a disadvantage that higher amount of moisture existing in the recording paper decreases significantly the surface resistance at the adsorbing side of the charging belt and the charge on the belt is lessened, resulting in lower adsorbing ability. Accordingly, when recording paper is printed on the entire surface with an ink having higher moisture content, the moisture content in the recording paper rises remarkably, and environmental atmosphere humidity may additionally promote the rise of moisture content, which cause a problem that the adsorbing ability turn to insufficient.

An ink-jet recording apparatus is proposed in Japanese Patent No. 3307472 wherein the recording paper is conveyed through charging the surface of endless belt. However, any ink composition is not disclosed in this proposal. By the way, ink formulation, in particular, the moisture and humectant contents are important in conveying recording paper by electrostatic adsorption; when printing is conducted using higher amount of printed ink such as solid black image by means of an ink having higher moisture content, the conveying by belt is likely to be rejected due to lowered adsorbing ability toward recording paper and/or the occurrence of cockling.

In addition, a heating unit for drying recording paper is proposed to maintain the conveying ability. However, the arrangement of heaters makes the apparatus complicate and additional electric power is required in accordance with the proposal.

EP-A-1243625 describes an aqueous recording liquid, a recording method and an apparatus using the same. The aqueous recording liquid comprises a colorant, 2,2,4-trimethyl-1,3-pentanediol, and at least one surfactant selected from the group consisting of polyoxyethylene alkyl ethers and polyoxyethylene alkyl ether acetates.

JP-A-2002285047 relates to an aqueous recording liquid, a recording method and an apparatus using the same. The aqueous recording liquid contains a coloring material, 2,2,4-trimethyl-1,3-pentanediol, and a polyoxyethylene alkyl ether surfactant and/or a polyoxyethylene alkyl ether acetate surfactant.

JP-A-2003003098 relates to an aqueous printing liquid, a printing method and a device using the same, wherein the aqueous ink is for use in ink jet printing and contains a water dispersible or water soluble colorant and a polyoxyethylene alkyl ether based surface active agent and a polyoxyethylene alkyl ether acetic acid salt based surface active agent.

JP-A-2002256187 describes an ink set for ink jet recording, an ink jet recording method and an ink jet recording device. The ink set comprises yellow, magenta and cyan color inks and black ink, wherein each ink comprises a coloring agent, a wetting agent, a surfactant, a penetrating agent, and a defoaming agent. The difference in foaming power at 25°C between the color inks and between each color ink and the black ink according to JIS 3362 is within 50 mm.

JP-A-2002265831 relates to an ink composition and a recording method using the same. The ink composition contains at least a self-dispersible pigment, polymer fine particles having an average particle size of ≤ 0.5 µm, a polyol or glycol ether, an anionic or non-ionic surfactant, a water-miscible organic solvent and water. The difference of volume average particle diameters, number average particle diameters or area average particle diameters between the self-dispersible pigment and the polymer fine particles is ≤ 50 nm.

### Disclosure of invention

An object of the present invention is to provide a recording ink capable of printing both sides of paper at relatively high speed, and an ink cartridge, an ink-jet recording apparatus, an ink-jet recording process, and a recorded matter that utilize the recording ink respectively.

Another object of the present invention is to provide a recording ink that is less likely to occur image deterioration even when the printing is conducted on both sides of paper at relatively high speed, and an ink cartridge, an ink-jet recording apparatus, an ink-jet recording process, and a recorded matter that utilize the recording ink respectively.

Another object of the present invention is to provide a recording ink that may exhibit a superior conveying ability even in an apparatus of relatively simple construction and may form superior images with higher density and less bleeding, and an ink cartridge, an ink-jet recording apparatus, an ink-jet recording process, and a recorded matter that utilize the recording ink respectively.

These objects may be attained in accordance with the present invention. In an aspect, the present invention provides a recording ink for ink-jet recording comprising a colorant, water, a humectant, a surfactant, and a wetting agent, wherein the colorant is at least one of carbon black treated with hypochlorous acid, carbon black treated with sulfonating agent, and carbon black having a free anionic group introduced by treating with a diazonium compound, characterized in that the decrease of image density under rubfastness test is 0.1 or less, wherein according to the rubfastness test solid black images were abraded 10 times using cotton cloth and Clock meter, and then the decrease of image density is measured, wherein the content of the water is 65 parts by mass or less and the content of the humectant is 20 parts by mass or more based on 100 parts by mass of the total recording ink, wherein the recoding ink is applied to an ink-jet recording apparatus capable of recording on a second recording side of a recording medium following recording on a first recording side of the recording medium, and the infiltrating period of the recording ink into the first recording side of the recording medium is 5 seconds or less, wherein the infiltrating period is defined as the period from the moment when the first recording side of the recording medium has been printed to the moment when a filter paper is brought into contact with the first recording side and the contacted filter paper has come not to carry any traces on separating from the first recording side.

In another aspect, the present invention provides an ink cartridge encapsulating the recording ink within a container.

In another aspect, the present invention provides an ink-jet recording apparatus comprising an ink-droplet ejecting unit configured to eject ink droplets for forming images on recording media through stimulating the recording ink.

In another aspect, the present invention provides an ink-jet recording process comprising stimulating the recording ink, ejecting ink droplets, and forming images.

In another aspect, the present invention provides a recorded matter comprising an image formed from the recording ink on a recording medium.

The present invention is based on the technical idea that the infiltrating period may be shortened to 5 seconds or less by incorporating a surfactant and a wetting agent adapted to control the infiltrating property of recording inks, and the bleedings may be suppressed by employing at least one of carbon black treated with hypochlorous acid, carbon black treated with sulfonating agent, and carbon black having a free anionic group introduced by treating with a diazonium compound, as a result the printing ability on both sides of paper may be significantly improved.

Further, the paper having higher moisture content exhibits lower surface resistance and lower electrostatic adsorbing force, compared to the paper having lower moisture content. The electrostatic adsorbing force decreases remarkably when an ink having higher moisture content is printed on paper in higher proportion over the surface area. As one of the measures, the amount of printed ink may be controlled lower only when solid black images are printed, however, the printed image density turns to lower at the same time in this measure. That is, the moisture content in the ink formulation should be reduced in order to maintain the higher image density as well as to assure the adsorbing force of the conveying belt.

On the other hand, the lower moisture content may decline the printing reliability such that the ejecting of ink droplets turn into troublesome and the nozzles of ink tend to dry prematurely. These problems are found to be resolved by an addition of humectant and proper amount of humectant and water, thereby the stable ejecting of ink may be assured.

### Brief Description of Drawings

FIG. 1 schematically shows an exemplary ink cartridge according to the present invention.
FIG. 2 schematically shows the ink cartridge of FIG. 1 and its case.

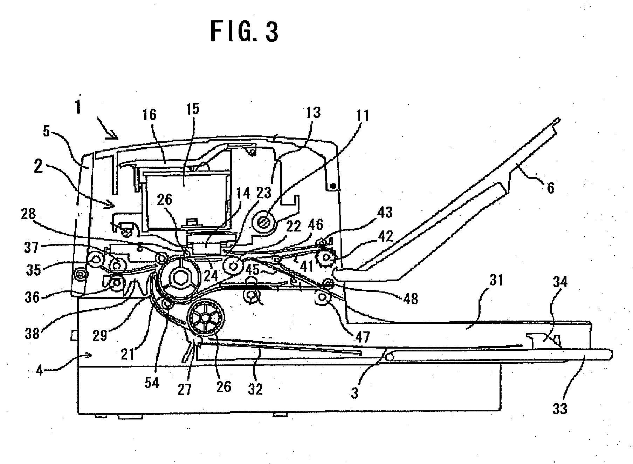

FIG. 3 schematically shows an exemplary ink-jet recording apparatus according to the present invention.
FIG. 4 schematically shows a perspective view of an ink-jet recording apparatus according to the present invention, in which the cover of the mounting portion of the ink cartridge is open.
FIG. 5 schematically shows an entire construction of an exemplary ink-jet recording apparatus according to the present invention.
FIG. 6 schematically shows a partially enlarged portion of an ink-jet head appropriate to the present invention.

### Best Mode for Carrying Out the Invention

### (Recording Ink)

The recording ink according to the present invention may be utilized in an ink-jet recording apparatuses capable of recording on a second recording side of a recording medium following recording on a first recording side of the recording medium; the recording ink comprises a colorant, water, a humectant, a surfactant, a wetting agent, and other ingredients depending on the necessity.

In the recording ink according to the present invention, the infiltrating period of the recording ink into the first recording side of the recording medium is 5 seconds or less, preferably 1 to 5 seconds; the infiltrating period is defined as the period from the moment when the first recording side of the recording medium has been printed to the moment when a filter paper is brought into contact with the first recording side and the contacted filter paper has come not to carry any traces on separating from the first recording side.

Preferably, the ink-jet recording apparatus conveys recording media through charging a surface of endless conveying belt and records images on the recording media through ejecting ink droplets from a recording head.

Preferably, the recording ink according to the present invention is utilized in an ink-jet recording apparatus that conveys recording media by charging a surface of an endless conveying belt and records images on the recording media by ejecting ink droplets from a recording head, and the content of the water is 65 parts by mass or less and the content of the humectants is 20 parts by mass or more based on 100 parts by mass of the total recording ink.

The recording ink according to the present invention utilizes water as the liquid medium. The content of the water is 65 parts by mass or less based on 100 parts by mass of the total recording ink, more preferably 30 to 65 parts by mass, still more preferably 45 to 62 parts by mass. When the water content is less than 30 parts by mass, the ejecting of the recording ink is likely to be difficult due to higher viscosity, when more than 65 parts by mass, the adsorbing force to adsorb the recording media may be insufficient.

### - Colorant -

The colorant is at least one of carbon black treated with hypochlorous acid, carbon black treated with sulfonating agent, and carbon black having a free anionic group introduced by treating with a diazonium compound.

Carbon black is an inorganic pigment.

Examples of pigment for black inks include carbon blacks such as furnace black, lamp black, acetylene black, channel black, and carbon black (C.I. Pigment black 7).

As for the carbon black, carbon black produced by furnace method or channel method and having an average particle diameter as the primary particle of 15 to 40 nm (nanometer), a specific surface area of 50 to 300 m²/g according to a BET adsorption method, a DBP oil absorption of 40 to 150 ml/100 g, volatile content of 0.5 to 10 % and pH of 2 to 9 is utilized; in particular, acid carbon black having a pH of 6 or less is preferable because of higher color density. Carbon black treated with hypochlorous acid, carbon black treated with sulfonating agent, and carbon black having a free anionic group such as sulfone group and carboxyl group introduced by treating with a diazonium compound are used.

Furthermore, the pigments of which surfaces are capsulated or the pigments whose polymers being grafted may be utilized as inks having excellent dispersion stability and high reliability.

In the present invention, a pigment-dispersed liquid containing a pigment dispersant may be available. Examples of pigment dispersant include naturally produced, semi-synthetic, and synthetic hydrophilic polymers. Examples of the naturally produced hydrophilic polymer include vegetable polymers such as arabian gum, tragacanth gum, guar gum, karaya gum, locust bean gum, arabinogalactan, pectin and quince seed starch; seaweed polymers such as alginic acid, carrageenan and agar; animals polymers such as gelatin, casein, albumin and collage; and microbial polymers such as xanthan gum and dextran. Examples of semisynthetic hydrophilic polymer include cellulose polymers such as methyl cellulose, ethyl cellulose, hydroxyethyl cellulose, hydroxypropyl cellulose and carboxymethyl cellulose; starch polymers such as sodium carboxymethyl starch and starch sodium phosphate ester; and seaweed polymers such as sodium alginate and propylene glycol ester alginate. Examples of pure synthetic hydrophilic polymer include vinyl polymers such as poly vinylalcohol, poly vinylpyrrolidone and poly vinylmethyl ether, uncrosslinked polyacrylamide, polyacrylic acid and alkali metal salts thereof, acrylic resins such as water-soluble styrene acrylic resin, water-soluble styrene maleate resin, water-soluble vinylnaphthalene acrylic resin, water-soluble vinylnaphthalene maleate resin, polyvinylpyrrolidone, polyvinyl alcohol, alkali metal salt of β-naphthalenesulfonic acid formalin condensation product, high molecular weight compounds having salts of cationic functional groups such as quaternary ammonium and amino groups in their side chain and natural high molecular weight compounds such as shellac.

Among these, those to which a carboxyl group being introduced such as those containing copolymer of homopolymer of acrylic acid, methacrylic acid, and styrene acrylic acid or monomer having other hydrophilic groups are preferable as the polymer dispersant.

In the case of surfactant, anionic surfactants such as polyoxyethylene alkyletherphosphate, polyoxyethylene alkyletheracetate, and nonionic surfactants such as nonylphenyl ether may be utilized.

In the present invention, quaternary ammonium compounds and quaternary phosphonium expressed by the following general formula are preferably employed as the dispersant of pigments or dyes. 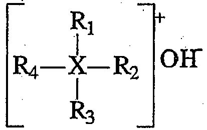 in which X represents a nitrogen or phosphorus atom; R₁, R₂, R₃ and R₄ each represents one selected from a hydrogen, an alkyl group, hydroxy alkyl group and halogenated alkyl group having 1 to 4 carbon atoms.

Specifically, the following compounds are exemplified.

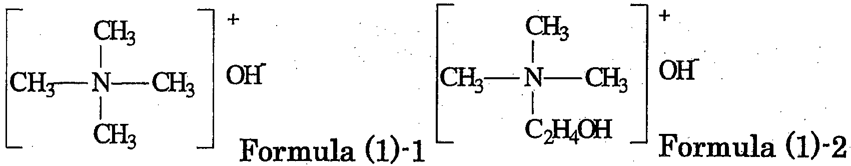

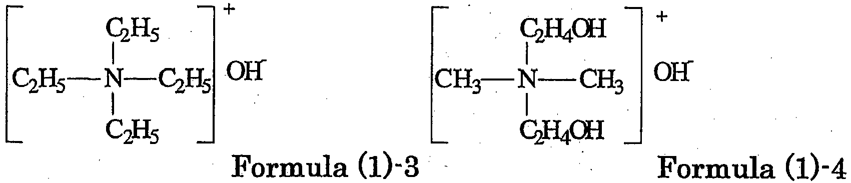

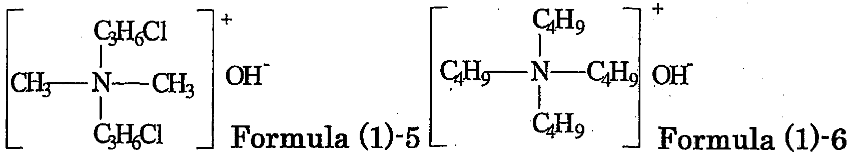

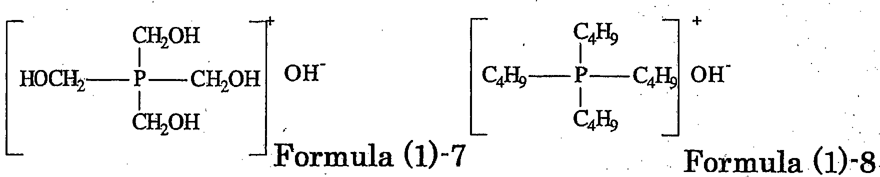

In the present invention, the wetting ability to the recording paper or media may be improved by using a surfactant. The surfactant is preferably at least one of anionic surfactants, nonionic surfactants, ampholytic surfactants, and fluorine-containing surfactants.

Examples of anionic surfactant include polyoxyethylene alkyl ether acetate, dialkyl sulfosuccinate, polyoxyethylene alkyl ether, polyoxyethylene alkyl phenyl ether, polyoxyethylene polyoxypropylene block copolymer and acetylenic glycol based surfactants. More specifically, by using polyoxyethylene alkyl ether acetate of Formula (2) below and/or dialkyl sulfosuccinate of Formula (3) below having a branched alkyl chain with 5 to 7 carbon chains, the characteristics on plain paper may be improved, and the stability of dissolved and dispersed coloring agent may be obtained.

Formula(2): R¹-O- (CH₂CH₂O) ₘCH₂COOM

in which, R¹ represents an alkyl group having 6 to 14 carbon atoms that may be branched; M represents an alkali metal ion, quaternary ammonium, quaternary phosphonium or alkanolamine; m is an integer of 3 to 12. 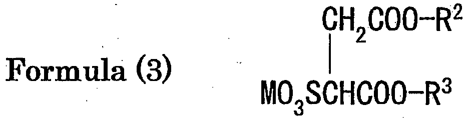 in which R² and R³ represent branched alkyl groups having 5 to 7 carbon atoms; M represents an alkali metal ion, quaternary ammonium, quaternary phosphonium or alkanolamine.

Furthermore, the surfactant exhibits excellent dissolution stability by using lithium ions, quaternary ammonium or quaternary phosphonium as the counter ions of the surfactant.

The preferable nonionic surfactants are acetylene glycols, polyoxyethylene alkylethers, polyoxyethylene alkylphenylethers, and polyethylene-polypropylene copolymers.

In addition, examples of preferable nonionic surfactants are those expressed by the Formula (4), which are polyoxyethylene alkyl phenyl ethers, and by the Formula (5), which is are acetylenic glycol based surfactants. Utilizing them in combination of themselves, increases the infiltration ability as a synergy effect, and thus ink having reduced bleeding on the boundary of colors and a less blurring of printed letters can be obtained. 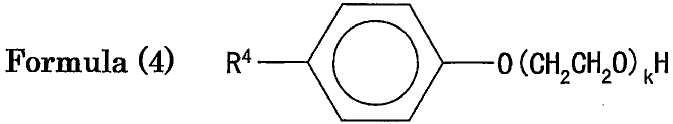 in which R⁴ represents a hydrocarbon group having 6 to 14 carbon atoms that may be branched, and k is an integer of 5 to 12. 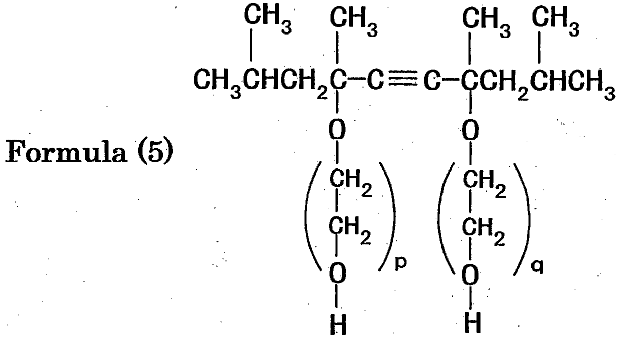 in which p and q are each an integer of 0 to 40.

When the pH of this ink adjusted to 6 or more, the storage stability of the ink can be obtained. The most of the electrography paper or letter papers used in offices have a pH of 5 to 6. In accordance with the present invention, the ink is ejected at a speed of 5 to 20 m/s in the form of droplets having an ejected mass of 2 ng to 50 ng (nano-gram) from a small outlet of 9 to 60 µm diameter on the kinds of paper for recording on so-called plain paper having a Stoeckigt Sizing Degree of 3 seconds or more according to the test method of JIS P-8122 with an adhered amount of a single color of 1.5 g/m² to 30 g/m², and thus a recording method for forming high quality and high resolution images can be realized. However, when pH is 9 or more, the properties may be changed easily with degradation of the surfactant of Formula (3) during storage, therefor it is preferable that the pH is 6 to less than 9 when the surfactant of Formula (3) is used.

The surfactants of an amount between 0.05 % by mass and 10 % by mass of formulas (2), (3), (4) and (5) for addition in the present invention leads to a desired permeability to the ink with characteristics required by a printer system. An amount of 0.05 % by mass or less causes bleeding on the boundary portion where two colors are superimposed in all the cases. The use of an amount of 10 % by mass or more at a low temperature causes precipitating of the compound itself, which is a mark of poor reliability.

Next, surfactants of Formulas (2) and (3) will be explained more specifically.

Formula (2)-1: CH₃(CH₂) ₁₂O (CH₂CH₂O) ₃CH₂COOH

Formula (2)-2: CH₃ (CH₂) ₁₂O (CH₂CH₂O) ₄CH₂COOH

Formula (2)-3 : CH₃ (CH₂) ₁₂O (CH₂CH₂O) ₅CH₂COOH

Formula (2)-4 : CH₃ (CH₂) ₁₂O (CH₂CH₂O) ₆CH₂COOH

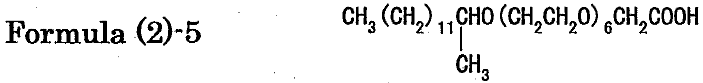

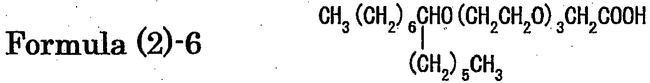

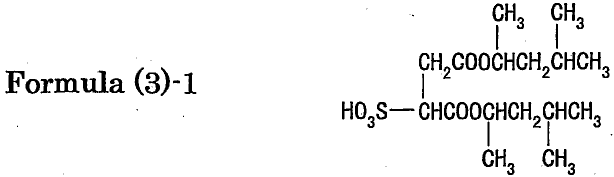

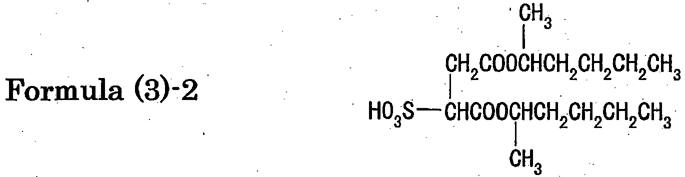

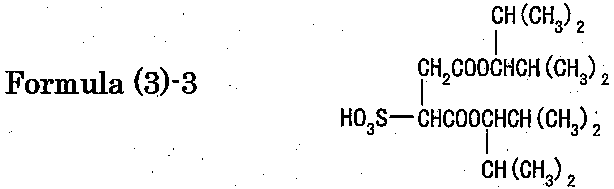

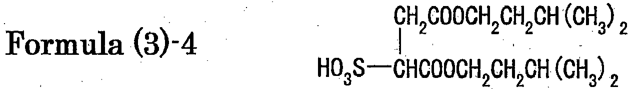

Examples of the ampholytic surfactant include laurylamino propionate, lauryldimethyl betaine, stearyldimethyl betaine, and lauryldihydroxyethyl betaine. More specifically, lauryldimethylamine oxide, myristyldimethylamine oxide, stearyldimethylamine oxide, dihydroxyethyl laurylamine oxide, polyoxyethylene coconutoil alkyldimethylamine oxide, dimethylalkyl coconutoil betaine, and dimethyllauryl betaine are exemplified.

As for the fluorine-containing surfactants, those expressed by the following formula are preferred.

CF₃CF₂(CF₂CF₂)ₘ-CH₂CH₂O(CH₂CH₂O)ₙH

in which m is an integer of 0 to 10; n is an integer of 1 to 40.

Examples of fluoroalkyl-containing cationic surfactant include perfluoroalkyl sulfonates, perfluoroalkyl carbonates, perfluoroalkyl phosphates, perfluoroalkyl ethyleneoxide addition products, perfluoroalkyl betaines, and perfluoroalkylamine oxide compounds.

Such fluoroalkyl-containing cationic surfactants are commercially available, for example, under the trade names of SURFLON S-111, S-112, S-113, S-121, S-131, S-132, S-141, S-145 (by Asahi Glass Co., Ltd.), FLUORAD FC-93, FC-95, FC-98, FC-129, FC-135, FC-170C, FC-430, FC-431, FC-4430 (by Sumitomo 3M Limited), UNIDYNE DS-202 (from Daikin Industries, LTD.), MEGAFAC F-470, F-1405, F-474 (by Dainippon Ink & Chemicals, Inco.), ZONYL FS-300, FSN, FSN-100, FSO (by DuPont Co.), EFTOP EF-351, EF-352, EF-801, EF-802 (from JEMCO Inc.). Among these, ZONYL FS-300, FSN, FSN-100, FSO (by DuPont Co.) are suitable with respect to reliability and color, therefore, are suitable for use.

### - Humectant -

The recording ink according to the present invention involves water as a liquid medium. In addition, the following humectants may be incorporated into the recording ink for the purpose of providing the ink with the desired properties, for preventing the ink drying during production and recording, and for improving the dissolution stability of the ingredients utilized in the recording ink. Examples thereof are as for polyhydric alcohols such as ethylene glycol, diethylene glycol, triethylene glycol, polyethylene glycol, polypropylene glycol, 1,3-propanediol, 1,3-butanediol, 1,4-butanediol, 1,2-pentanediol, 1,2-hexanediol, glycerol, 1,2,6-hexanetriol, 1,2,4-butanetriol, 1,2,3-butanetriol and 3-methylpentane-1,3,5-triol; polyhydric alcohol alkylethers such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether and propylene glycol monoethyl ether; polyhydric alcohol aryl ethers such as ethylene glycol monophenyl ether and ethylene glycol monobenzyl ether; nitrogen-containing heterocyclic compounds such as N-methyl-2-pyrrolidone, N-hydroxyethyl-2-pyrrolidone, 2-pyrrolidone, 1,3-dimethylimidazolidinone and ε-caprolactam; amides such as formamide, N-methylformamide, formamide and N,N-dimethylformamide; amines such as monoethanolamine, diethanolamine, triethanolamine, monoethylamine, diethylamine and triethylamine, sulfur-containing compounds such as dimethylsulfoxide, sulfolane and thiodiethanol, propylene carbonate, ethylene carbonate, γ-butyrolactone and the like. These solvents can be used alone or in combination together with water.

Among these, particularly preferable examples are glycerin, ethylene glycol, diethylene glycol, triethylene glycol, propylene glycol, dipropylene glycol, tripropylene glycol, 1,3-butanediol, 2,3-butanediol, 1,4-butanediol, 1,5-pentanediol, tetraethylene glycol, 1,6-hexanediol, 2-methyl-2,4-pentanediol, polyethylene glycol, 1,2,4-butanetriol, 1,2,6-hexanetriol, thiodiglycol, 2-pyrrolidone, N-methyl-2-pyrrolidone, N-hydroxyethyl-2-pyrrolidone, and 1,3-dimethylimidazolidinone.

By employing these compounds, suitable effects may be obtained with respect to preventing inferior ejecting property due to higher affinity with water and the fluidity derived by these compounds.

In particular, in the present invention, preferable examples of the solvent to provide the dispersion stability of the colorant are as for pyrrolidone derivatives such as N-hydroxyethyl-2-pyrrolidone.

The content of the humectants is preferably 20 parts by mass or more based on 100 parts by mass of the total recording ink, more preferably 20 to 55 parts by mass, still more preferably 25 to 45 parts by mass. When the water content is less than 20 parts by mass, the ejecting of the recording ink is likely to be difficult due to higher viscosity, when more than 65 parts by mass, the adsorbing force to adsorb the recording media may be insufficient.

Furthermore, examples of additive wetting agents for the purpose of adjusting the surface tension other than the surfactants of Formulas (2) to (5) are alkyl and aryl ethers of polyhydric alcohols such as diethylene glycol monophenyl ether, ethylene glycol monophenyl ether, ethylene glycol monoallyl ether, diethylene glycol monophenyl ether, diethylene glycol monobutyl ether, propylene glycol monobutyl ether, triethylene glycol monobutyl ether and tetraethylene glycol chlorophenyl ether; diols such as 2-ethyl-1,3-hexanediol, 2,2,4-trimethyl-1,3-pentanediol and 2,2-dimethyl-1,3-propanediol; polyoxyethylene polyoxypropylene block copolymer, fluorochemical surfactant, and lower alcohols such as ethanol and 2-propanol. Particularly preferable examples are diethylene glycol monobutyl ether as a polyhydric alcohol alkyl ether, and 2-ethyl-1,3-hexanediol and 2,2,4-trimethyl-1,3-pentAnediol as diols having 6 or more carbon atoms. Diols are suitable because they hardly cause water-insoluble coloring material to aggregate. The amount thereof to be added depends partly on the type and the desired properties, but they are added in a range of 0.1 to 20 % by mass, and preferably 0.5 to 10 % by mass. At an amount of less than the lower limit, the permeability is insufficient, and an amount of more than the upper limit adversely affects the characteristics for forming particles. Furthermore, the addition of them improves the wetting ability to the ink jet head members or recording instruments so that the filling properties are improved, and thus poor recording due to bubbles hardly occurs.

In the investigations to prevent the inferior image quality caused by abrasion with contacting members, it is found that only the higher infiltrating ability does not necessarily afford the solution, but the fixing under the existence of resin ingredient is effective even in plain paper, more specifically, the higher abrasion resistance may result in the prevention of inferior image quality even in the both side recording.

As for the resin ingredient, soluble resins and resin emulsions are preferable.

Examples of the soluble resin include polyacrylic acid, polysodium acrylate, polyvinyl alcohol, hydroxyethyl cellulose, and the like.

As for the resin emulsions, the emulsion of acryl resin or styrene-acryl resin may be for example prepared by blending and reacting (meth)acrylic acid ester or styrene, (meth)acrylic acid ester, optimal (meth)acrylic acid ester, a surfactant, and water. In general, the mixing ratio of a resin to a surfactant is preferably 10:1 to 5:1. When the amount of surfactant is insufficient, the resin emulsion is difficult to form, when the amount is excessive, the water resistance of the ink tends to decrease and the penetration ability tends to deteriorate. The mass of water in the dispersed phase of emulsions is 60 to 400 parts by mass, preferably 100 to 200 parts by mass based on 100 parts by mass of resin.

As commercially available resin emulsions, Micro gel E-1002, E-5002 (styrene-acrylic resin emulsion, by Nippon Paint Co., Ltd.), Boncoat 4001 (acrylic resin emulsion, by Dai Nippon Ink and Chemicals Inc.), Boncoat 5454 (styrene-acrylic resin emulsion, by Dai Nippon Ink and Chemicals Inc.), SAE-1014 (styrene-acrylic resin emulsion, by Nippon Zeon Corp.), Saivinol SK-200 (acrylic resin emulsion, Saiden Chemical Industry Col, Ltd.) and the like are exemplified.

The recording ink according to the present invention may include other ingredients depending on the requirements such as antiseptic or antifungal agent, pH adjusting agent, chelating agent, rust-preventive agent, anti-oxidizing agent, and UV ray absorber.

Examples of the antiseptic or antifungal agent include sodium dehydroacetate, sodium sorbate, 2-pyridinethiol-1-oxide sodium, sodium benzoate, pentachlorophenol sodium, and isothiazoline.

The pH adjusting agent may be any substance, as long as it can adjust the pH to 7 or more without adversely affecting the ink; examples of the pH adjusting agent include amines such as diethanolamine and triethanolamine, hydroxides of alkali metal such as lithium hydroxide, sodium hydroxide and potassium hydroxide, ammonium hydroxide, quaternary ammonium hydroxide, quaternary phosphonium hydroxide, carbonates of alkali metals such as lithium carbonate, sodium carbonate and potassium carbonate.

Examples of the chelating agent include sodium ethylenediamine tetraacetate, sodium nitrilotriacetate, sodium hydroxyethyl ethylenediaminetriacetate, sodium diethylenetriaminepentaacetate, sodium uramil diacetate and the like.

Examples of the rust-preventive agent include acid sulfite, sodium thiosulfate, ammonium thiodiglycolate, diisopropyl ammonium nitrite, pentaerythritol tetranitrate, dicyclohexylammonium nitrite and the like.

Further, dyes may be available in the present invention. The dyes may be acidic dyes, direct dyes, basic dyes, reactive dyes and edible dyes as classified by the Color Index system, which have excellent water resistance and light resistance.

The acidic dyes may be properly selected depending on the reqirements without particular limitations for example from food dyes; examples thereof include C. I. Acid Yellow 17, 23, 42, 44, 79 and 142; C. I. Acid Red 1, 8, 13, 14, 18, 26, 27, 35, 37, 42, 52, 82, 87, 89, 92, 97, 106, 111, 114, 115, 134, 186, 249, 254 and 289; C. I. Acid Blue 9, 29, 45, 92 and 249; C. I. Acid Black 1, 2, 7, 24, 26 and 94; C. I. Food Yellow 2, 3 and 4; C. I. Food Red 7, 9 and 14; and C. I. Food Black 1 and 2.

Examples of the direct dyes include C. I. Direct Yellow 1, 12, 24, 26, 33, 44, 50, 86, 120, 132, 142 and 144; C. I. Direct Red 1, 4, 9, 13, 17, 20, 28, 31, 39, 80, 81, 83, 89, 225 and 227; C. I. Direct Orange 26, 29, 62 and 102; C. I. Direct Blue 1, 2, 6, 15, 22, 25, 71, 76, 79, 86, 87, 90, 98, 163, 165, 199 and 202; C. I. Direct Black 19, 22, 32, 38, 51, 56, 71, 74, 75, 77, 154, 168 and 171.

Examples of the basic dyes include C. I. Basic Yellow 1, 2, 11, 13, 14, 15, 19, 21, 23, 24, 25, 28, 29, 32, 36, 40, 41, 45, 49, 51, 53, 63, 64, 65, 67, 70, 73, 77, 87 and 91; C. I. Basic Red 2, 12, 13, 14, 15, 18, 22, 23, 24, 27, 29, 35, 36, 38, 39, 46, 49, 51, 52, 54, 59, 68, 69, 70, 73, 78, 82, 102, 104, 109 and 112; C. I. Basic Blue 1, 3, 5, 7, 9, 21, 22, 26, 35, 41, 45, 47, 54, 62, 65, 66, 67, 69, 75, 77, 78, 89, 92, 93, 105, 117, 120, 122, 124, 129, 137, 141, 147 and 155; and C. I. Basic Black 2 and 8.

Examples of the reactive dyes include C. I. Reactive Black 3, 4, 7, 11, 12 and 17; C. I. Reactive Yellow 1, 5, 11, 13, 14, 20, 21, 22, 25, 40, 47, 51, 55, 65 and 67; C. I. Reactive Red 1, 14, 17, 25, 26, 32, 37, 44, 46, 55, 60, 66, 74, 79, 96 and 97; C. I. Reactive Blue 1, 2, 7, 14, 15, 23, 32, 35, 38, 41, 63, 80 and 95.

The color of the recording ink according to the present invention may be properly selected depending on the requirements, and may be cyan, magenta, yellow, or black. When an ink set containing two or more of these inks are utilized, images with multi colors may be formed; when an ink set containing all of these inks are utilized, full-color images may be formed.

The properties of the ink of the present invention can be adjusted as appropriate for the system. Herein, the surface tension of ink is an indicator that indicates the infiltrating ability into paper, and measuring of dynamic surface tension of ink should be conducted with in short time of one or less second after the surface to be measure is prepared, thereby determined value well corresponds to the permeability of the ink measured. This is different from figures on a static surface tension determined by the period of time consumed in reaching saturation. The dynamic surface tension can be measured according to any of conventionally known methods such as one described in JP-A No. 63-312372 that enables to measure a dynamic surface tension with in short time as period of one second or less.

The surface tension is preferably 50 mN/m or less, more preferably 40 mN/m or less, for excellent drying properties. On the other hand, in view of the stability of the ejecting of the ink drops, if the dynamic surface tension is too low, unstable forming of liquid particles is brought. The dynamic surface tension allowing stable ejection is preferably 40 mN/m or more at 1 ms.

The viscosity range can be selected with appropriateness between 1 mPa·s and 20 mPa·s, depending on the ejection method. Preferably, the volume-averaged particle diameter of pigment in the recording ink is 10 to 300 nm, more preferably the volume-averaged particle diameter is 60 to 120 nm.

The recording ink according to the present invention may be principally applied to any ink-jet heads of printer, such ink-jet heads include piezoelectric ink-jet heads that eject ink droplets by changing the capacities of ink channels by deforming diaphragms forming wall faces of the ink channels by using piezoelectric elements as energy generation means for generating energy for pressurizing ink in the ink channels (see JP-A No. 2-51734), so-called bubble type ink-jet heads that eject ink droplets by means of pressures produced by generating air bubbles by heating ink in ink channels using calorific resistances (see JP-A No. 61-59911), and electrostatic ink-jet heads that eject ink droplets by changing the volumes of ink channels by deforming diaphragms forming wall faces of the ink channels by means of electrostatic forces generated between the diaphragms and electrodes that are arranged to oppose each other (see JP-A No. 6-71882).

The recording ink according to the present invention may be applied to image forming apparatuses of ink-jet recording in various industrial fields, and the apparatus may be equipped with a printer that heats the recording media and the recording ink to 50 to 200°C before and/or after the printing in order to enhance the image fixture. Furthermore, the recording ink according to the present invention may be properly applied ink cartridge, an ink-jet recording apparatus, an ink-jet recording process, and a recorded matter in particular.

### (Ink Cartridge)

The ink cartridge according to the present invention may be provided by charging the aforesaid recording ink according to the present invention into a container, and may comprise the other members properly selected depending on the requirements.

The shape, configuration, size, material and the like of the container may be properly selected depending on the application; for example, the container may be comprised of an ink bag formed of aluminum laminated film, resin film and the like.

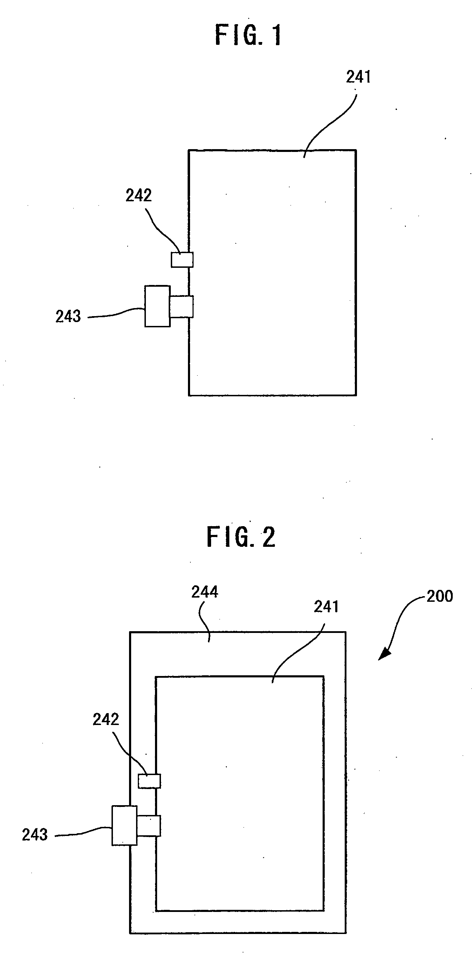

An aspect of the inventive ink cartridge will be explained with reference to FIGs. 1 and 2. FIG. 1 schematically shows an exemplary ink cartridge according to the present invention, FIG. 2 schematically shows the ink cartridge of FIG. 1 and its case 200.

The recording ink, as shown in FIG. 1, is loaded into ink bag 241 from ink inlet 242, which is sealed by fusion after evacuating the ink bag. Ink outlet 243 formed of rubber material is pierced and the recording ink is fed into the apparatus in use. Ink bag 241 is formed of a non-permeable packaging material such as aluminum laminate film. The ink bag 241 is usually encased in cartridge case 244, as shown in FIG. 2, in a manner to allow installation and removal for various ink-jet recording apparatuses.

### (Inkjet Recording Apparatus and Inkjet Recording Process)

The inkjet recording apparatus according to the present invention comprises at least a unit for ejecting ink drops, and the other units selected properly depending on the requirements such as impulse generating unit, controlling unit or the like.

The inkjet recording process according to the present invention comprises at least ejecting ink drops, and the others selected properly depending on the requirements such as impulse generating, controlling or the like.

The inkjet recording process according to the present invention may be preferably performed by means of the inkjet recording apparatus according the present invention; and the others may be preferably performed by means of other units.

### - Process for Ejecting Ink Drops and Unit for Ejecting Ink Drops -

In the process for ejecting ink drops, impulses or stimulating is applied to the inventive recording ink, then ink drops are ejected to form an image. In the unit for ejecting ink drops, impulses or stimulating is applied to the inventive recording ink, then ink drops are ejected to form an image. The unit for ejecting ink drops may be selected without particular restrictions, for example, may be one that includes various nozzles for ejecting ink.

In carrying out the present invention, preferably, at least a part of the liquid room portion, flow resisting portion, vibrating plate, and nozzle member of the inkjet head is formed of material containing silicon or nickel.

The above-noted impulse may be generated through the above-noted impulse generating unit for example. The impulse may be properly selected without particular limitations; for example, the impulse may be by means of at least one of heating, pressuring, vibrating, and irradiating. These may be employed in single or in combination. Among these, heating and pressuring are preferred.

Specifically, examples of the impulse generating unit include a heating device, pressure device, piezoelectric element, vibration generating device, ultrasonic generating device, light and the like, more specifically, piezoelectric actuator such as piezoelectric element, thermal actuator based on phase-change of film between liquid and vapor by means of electothermal element such as heating resistor, shape memory alloy actuator based on phase-change depending on temperature, electrostatic actuator based on electrostatic power and the like are exemplified.

The process for ejecting ink drops may be properly selected depending on the aforesaid impulse without particular limitations. In the case that the impulse is of "heat", such process is exemplified as thermal energy corresponding to the recording signal is applied on the recording ink in the recording head by means of a thermal head, then bubbles are generated in the recording ink through the thermal energy, thereby the recording ink is ejected from the nozzle of the recording head in a form of ink drops owing to the pressure of bubbles. Alternatively, in the case that the impulse is of "pressure", such process is exemplified as a voltage is applied to a piezoelectric element which is disposed and adhered in so-called pressure room on the way of ink passage in the recording head, as a result the piezoelectric element is deflected thereby the volume of the pressure room is reduced, then the recording ink is ejected from the nozzle of the recording head in a form of ink drops.

Preferably, the ink-jet recording apparatus comprises a conveying unit equipped with a reversing mechanism configured to reverse a recording medium so as to make the second recording side of the recording medium possible to be record following recording on the first recording side of the recording medium.

As for the conveying unit, (1) a conveying belt that makes use of electrostatic force, (2) a sustaining unit that makes use of evacuated air, and (3) a combination of paper-conveying rollers and paper-discharging rollers, are preferred. Preferably, the conveying belt is charged by applying an AC bias of ± 1.2 kV to ± 2.6 kV to a charging roller. In addition, the conveying belt adsorbs the recording medium by force of 15 N or more.

Further, the ink-jet recording apparatus preferably comprises a scraping unit configured to scrape down the adhered and fixed recording ink to a receiver. The scraping unit is preferably one of wiper and cutter.

In addition, the controlling unit may be any one as long as it can control the individual unit efficiently; example thereof include a sequencer and computer.

Next, an exemplary ink-jet recording apparatus that is adapted to record using the ink-jet ink according to the present invention will be explained in the following. FIG. 1 schematically shows a mechanism part of the exemplary ink-jet recording apparatus in an aspect of the present invention.

The ink-jet recording apparatus comprises main body 1 and printing unit 2, the printing unit 2 is equipped with a carriage movable in the main scanning direction, a recording head containing an ink-jet head mounted on the carriage, an ink cartridge for feeding an ink to the recording head and the like.

A paper-supplying cassette 4 (or a paper-supplying tray) capable of loading a lot of paper 3 from the front side can be connected detachably at the lower part of the main body 1. In addition, a manual paper-supplying cassette 5 for supplying the paper 3 manually can be opened at the lower part of the main body 1. The paper 3 is taken from the paper-supplying cassette 4 or the manual paper-supplying cassette 5 in the printing unit 2. A picture is recorded by the printing unit 2 and then discharged to the paper-discharging tray 6 connected to a back side of the main body 1. Further, upper cover 7 is mounted in an open-close fashion on the main body.

Printing unit 2 is slidably supported by main guide rod 11 and sub-guide rod 12 in the main scanning direction, wherein both the main guide rod 11 and the sub-guide rod 12 bridge left and right side plates (not shown) of the ink jet printer 1. The ink jet recording head 14 may be a single color print head (black) or may preferably have nozzles (not shown) for ejecting yellow (Y), cyan (C), magenta (M), and black (B) ink drops. The head 14 is mounted on the bottom surface of the carriage 13 such that the nozzles can eject ink drops in a downward direction. The carriage 13 is provided on the top surface thereof with disposable ink tanks 15 (i.e., ink cartridges) for supplying the color ink to the respective nozzles. The ink tanks 15 are secured to the carriage 13 by a support lever 16. To release the ink tanks 15, the support lever 16 is unhooked and rotated.

Alternatively, the ink jet recording head 14 may be replaced by a plurality of recording heads, aligned in the main scanning direction, each for ejecting each color ink or a recording head having a single nozzle for ejecting a plurality of different color inks.

Under the print unit 2, a main transport roller 21 and a sub-transport roller 22 are provided such that a transport belt 23 movably stretched therebetween can transport the sheet 3 to a print position located immediately under the nozzles of the ink jet recording head 14. Electrostatic force is used for the transportation of the sheet 3 by the transport belt 23. A platen plate 24 is provided at a position opposed to the ink jet recording head 14 and positioned relative to the transport belt 23. Preferably, the main transport roller 21 has a sufficiently large diameter (i.e., about 30 mm or more) to generate enough electrostatic force so as to prevent the sheet 3 from separating from the transport belt 23 during the turning period around the main transport roller 21 of the transportation movement. The transport belt 23 preferably is made of medium resistance substance having a volume resistance range of 10⁸ Ω·cm to 10¹¹ Ω·cm. In addition, a transportation direction regulating roller 25 is mounted at a location before the print position on the transport belt 23, pressing the main transport roller 21 via the transport belt 23 and regulating the transportation direction of the sheet 3 so that the sheet 3 is transported in the direction that the transport belt 23 moves.

The sheet 3 in the input sheet cassette 4 is picked up and fed into a transportation path in the ink jet printer 1 via a pick-up roller 26 and a friction pad 27. The sheet 3 is then transported along a guide plate 29 to a midway roller 28, located before the transportation direction regulating roller 25 on the periphery of the main transport roller 21, for pressing the sheet 3 onto the surface of the transport belt 23. Thereby, the sheet 3 from the input sheet cassette 4 is transported to the transport belt 23 which will further transport the sheet 3 to the print position. The input sheet cassette 4 includes a cassette main body 31, a bottom plate 32, and an extension bottom plate 33. The sheets 3 are placed on a planar surface defined by the bottom plate 32 and the extension bottom plate 33. Such a planar surface for receiving and holding the sheets 3 can be extended by changing the position of the extension bottom plate 33, thereby making it possible to use a sheet having a length longer than the cassette main body 31. In addition, an end fence 34 is mounted on the upper surface of the extension bottom plate 33.

Also, the sheet 3 which is inserted from the manual input tray 5 when the manual input tray 5 is in an open position is picked up and fed into another transportation path in the ink jet printer 1 via a manual input pick-up roller 35 and a pair of manual input transportation rollers 36 and 37. The sheet 3 is then transported along a manual input guide plate 38 to the midway roller 28. Thereby, the sheet 3 from the manual input tray 5 is transported to the transport belt 23 which will further transport the sheet 3 to the print position.

In order to discharge the printed sheet 3 to output sheet tray 6, or to feed the one-side-printed sheet 3 to output sheet tray 6 and then to feed into the apparatus 1, guide member 41, 42, 43 to guide sheet 3, separating claw 44 to change paper-discharging to paper-refeeding, paper-discharging roller 45 capable of rotating in normal and reverse directions to feed sheet 3 to output sheet tray 6 and then to feed again into the apparatus, and paper discharging roller 46 cooperating with paper-discharging roller 45 are equipped.

Further, guide member 42 is integrally provided a guide part for feeding sheet 3 to conveying belt 23 so as to feed sheet 3 again, and cooperating roller 47 is provided to operate with conveying roller 21, which conveys sheet 3 along the guide part, in order to feed sheet 3 to intermediate roller 28. In addition, paper-detecting sensor 48 is provided to detect the passing of sheet 3 during the passage is conducted by guide member 41.

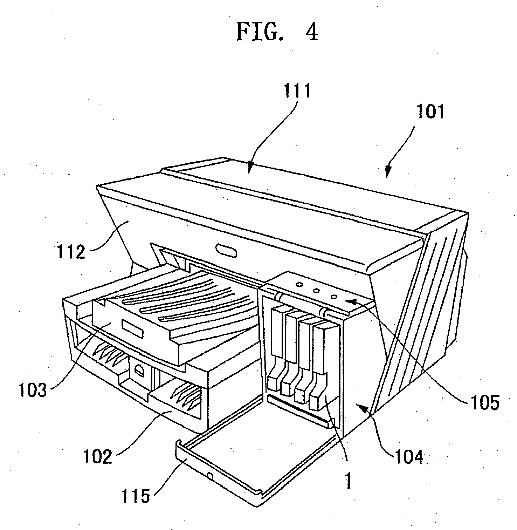

An aspect of the inventive inkjet recording process which utilizes the inventive inkjet recording apparatus will be explained with reference to Figures. The inkjet recording apparatus shown in FIG. 4 comprises main body 101, paper feeding tray 102 mounted on the main body 101 for charging paper, paper discharging tray 103 mounted on the main body 101 for stocking the image-recorded (formed) paper, and ink cartridge mounting portion 104. The upper surface of upper cover 111 of apparatus main body 101 is substantially flat, the front side 112 of the front cover of apparatus main body 101 is inclined backward against the upper side; output sheet tray 103 and input sheet tray 102, projecting frontward, are arranged at the lower side of inclined front side 112.

Ink cartridge mounting portion 104 is provided at the site of frontward from front side 112 and below upper cover 111 on one side of front side 112; controlling portion 105 including a control key and display etc. is disposed on the upper side of the ink cartridge mounting portion 104. The ink cartridge mounting portion 104 comprises closing-opening front cover 115 in order to install and remove ink cartridge 1.

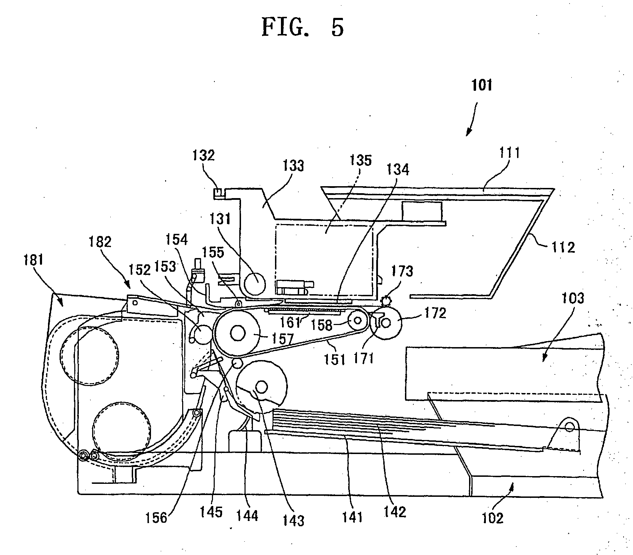

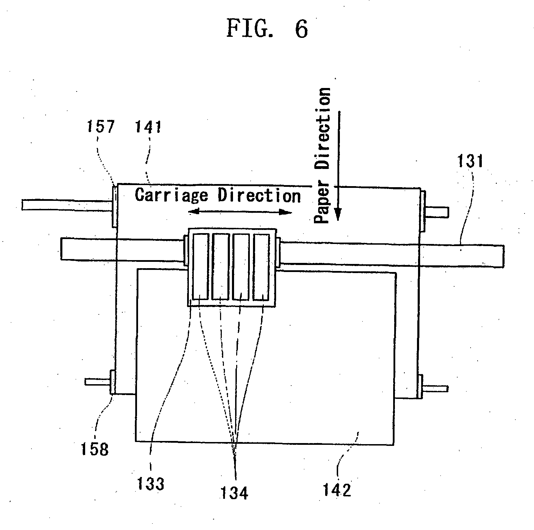

In the main body 101, as shown in FIGs. 5 and 6, carriage 133 is supported by guide rod 131, sustained by the right and left side plates (not shown), and stay 132 as supporting members, such that carriage 133 may freely slide in the main scanning direction, and may be scanned by a main scanning motor (not shown).

Carriage 133 comprises recording head 134, equipped with four inkjet recording heads that eject the respective recording ink drops of yellow (Y), cyan (C), magenta (M) and black (BK), wherein recording head 134 is mounted such that the respective ink outlets cross with the direction of main scanning, and the ejected inks travel downward.

The inkjet recording head of recording head 134 may comprise an energy generating unit for ejecting the recording ink, for example, a piezoelectric actuator such as piezoelectric element, thermal actuator based on phase-change of film between liquid and vapor by means of electothermal element such as heating resistor, shape memory alloy actuator based on phase-change depending on temperature, and electrostatic actuator based on electrostatic power.

Further, color-identified sub-tanks 135 for supplying color-identified inks to the recording head134 are mounted on carriage 133. The inventive recording inks is fed and supplied to sub-tanks 135 from inventive cartridge 1, mounted on ink cartridge mounting portion 104, through a recording ink supplying tube (not shown).

On the other hand, the paper feeding portion for feeding accumulated paper 142 on paper accumulating portion 141 of paper feeding tray 103 comprises a half-moon roller (paper feeding roller 143) and separating pad 144, in which the half-moon roller feeds paper separately one by one from paper accumulating portion 141, separating pad 144 is disposed oppositely to paper feeding roller 143 and is formed of a material with relatively higher friction coefficient, and separating pad 144 is pressed toward paper feeding roller 143.

The transporting portion, which transport paper 142 from the paper feeding portion at the space below recording head 134, comprises transporting belt 151 that attract paper 142 by electrostatic effect and transport it; counter roller 152 that transports paper 142 from the paper feeding portion through guide 145 by pinching with transporting belt 151; transporting guide 153 to accommodate paper 142, transported approximately in vertical direction, to transporting belt 151 with about 90 degrees of direction change; and top pressing roller 155 that is pressed toward transporting belt 151 by pressing member 154; and also electrifying roller 156 that electrifies the surface of transporting belt 151.

Transporting belt 151 is an endless belt that is spanned over transporting roller 157 and tension roller 158 and is able to rotate in the transporting direction of belt.

At the back side of transporting belt 151, guide member 161 is disposed at the corresponding region with the printing region by recording head 134.

Further, the paper discharging portion that discharges paper 142 recorded by recording head 134 comprises separating pawl 171 for separating paper 142 from transporting belt 151, paper discharging roller 172, and paper discharging roller 173. Paper discharging tray 103 is disposed below paper discharging roller 172.

At the back side of main body 101, double-side paper feeding unit 181 is mounted in a manner that permits the installation and removal. Double-side paper feeding unit 181 entraps paper 142 returned by reverse rotation of transporting belt 151, turn over it, then feed it again between counter roller 152 and transporting belt 151. By the way, manual paper feeding portion 182 is provided over double-side paper feeding unit 181.

When the printing is carried out in both sides of paper, the paper is conveyed to the paper-feeding unit and reversed immediately after the first side has undergoes printing with no waiting period. The recording ink according to the present invention exhibits higher infiltrating ability and contains lower moisture content, therefore, may be reversed without causing smears of printed images in spite of not providing drying means such as a heater and drying period.

In the ink-jet recording apparatus of the construction, sheets of paper 142 are fed one by one from the paper-feeding unit, the upwardly fed paper 142 is directed by guide 145, pinched and conveyed between conveying belt 151 and counter roller 152, the top edge of the paper is directed by the conveying guide 153 then urged to conveying belt 151 by tip-pressing roller 155, thus the conveying direction is transferred about 90 degrees.

At the time, charging belt 157 has been charged by charging roller 156, therefore, paper 142 is conveyed by conveying belt 151 in an electrostatically adsorbed condition. Then, recording head 134 is driven depending on image signals while moving carriage 133, and ink droplets are ejected against the stopping paper 142 to record the printing of one line, then paper 142 is conveyed in a predetermined distance and the printing is carried out for the next line. The recording operations are ceased when the signal is received that recording has been completed or rear edge of paper 142 has arrived to the recording regionp; then paper 142 is discharged to paper-discharging tray 103.

The recording paper may be adsorbed to the conveying belt by the electrostatic force caused by micro electric field, which is induced intermittently by charging alternate positive and negative charges in a certain pitch on the charging belt through applying AC bias on the charging belt. Preferably, the conveying belt is charged by applying the AC bias of ± 1.2 kV to ± 2.6 kV, more preferably ± 1.6 kV to ± 2.4 kV to the charging roller. When the AC bias is lower than the range, the adsorbing force is insufficient, when higher than the range, the small ink droplets ejected from the nozzle are not applied to the paper under the effect of the electric charge, but swirl back to the head, resulting in smears around the head. The electric property of the ink relates to the charge effect on the small droplets. That is, larger electric conductivity leads to higher electric sensitivity of ejected droplets, therefore, the electric conductivity should be suppressed.

When the signal is detected that the remaining ink is little in subtank 135, the pre-required amount of ink is supplied from ink cartridge 1 to subtank 135.

By the way, although the examples of the present invention are those applied to Serial type (Shuttle type) inkjet recording apparatus hereinbefore, the present invention is similarly applicable to Line type inkjet recording apparatus equipped with a line type head.

In addition, the inkjet recording apparatus and inkjet recording process according to the present invention may be applied to various recording based on inkjet recording, for example, to printers for inkjet recording, facsimile, copier, complex apparatus of printer/facsimile/copier.

### (Recorded matter)

The recorded matter recorded by the ink jet recording apparatus and by the ink jet recording process according to the present invention is a recorded matter according to the present invention. The recorded matter according to the present invention comprises an image formed by the recording ink according to the present invention on a recording material.

The recording material is not limited and may suitably be selected according to the purpose, and examples of the recording material include plain paper, glossy paper, special paper, cloth, film, overhead projection (OHP) sheet, and the like. These may be used alone or in combination of two or more.

The recorded matter may suitably be used for various purposes as a material on which a vivid image is recorded having no white streak and image density fluctuation.

The present invention will be illustrated in more detailed with reference to examples given below, but these are not to be construed as limiting the present invention. All percentages and parts are by mass unless indicated otherwise.

### [Reference Example 1]

### - Carbon Black 1 Treated with Hypochlorous Acid -

First, 300 g of commercially available acidic carbon black of pH2.5 (MONARCH 1300, by Cabot Corporation) was mixed sufficiently with 1000 ml of water, and 450 g of sodium hypochlorite (available chlorine concentration of 12%) was dripped into the mixture, followed by stirring at 100 to 105°C for eight hours. Then, 100 g of sodium hypochlorite (available chlorine concentration of 12%) was further added to this solution and the entire solution was dispersed by a lateral-type dispersing device for three hours. The resulting slurry was diluted with water by a factor of 10, and the pH was adjusted with lithium hydroxide, followed by desalination and concentration with an ultrafiltration membrane until an electric conductivity of 0.2 mS/cc was attained. Thus, a carbon black dispersing liquid having a pigment concentration of 15% was obtained. Large particles were removed by centrifugation, and further the carbon black dispersing liquid was filtrated with a nylon filter having pore size of 1 micron. The resulting carbon black dispersing liquid was denoted as carbon black dispersing liquid 1. The total content of Fe, Ca and. Si was 100 ppm or less according to ICP measurement. The concentration of chlorine ions was 10 ppm or less. The average particle size (D50%) measured by the Particle Size Analyzer (Microtrack UPA, Nikkiso Co., Ltd.) was 95 nm.

### [Reference Example 2]

### - Carbon Black 2 Treated with Sulfonating Agent -

First, 150 g of commercially available carbon black pigment (Printex No. 85, by Degussa Co.) was mixed sufficiently with 400 ml of sulfolane, and the mixture was dispersed minutely by a ball mill. Then, 15 g of amidosulfuric acid was added to the mixture, followed by stirring at 140 to 150°C for 10 hours. The resulting slurry was fed into 1000 ml of de-ionized water and subjected to centrifugation at 12000 rpm thereby a surface-treated carbon black wet cake was obtained. This carbon black wet cake was dispersed again in 2000 ml of de-ionized water, and the pH was adjusted with lithium hydroxide, followed by desalination and concentration with an ultrafiltration membrane. Thus, a carbon black dispersing liquid having a pigment concentration of 10% was obtained. This liquid was filtrated with a nylon filter having pore size of 1 micron, and the resulting liquid was denoted as carbon black dispersing liquid 2. The total content of Fe, Ca and Si was 100 ppm or less according to ICP measurement. The concentration of sulfuric acid ions was also 100 ppm or less. The average particle size (D50%) measured by the Particle Size Analyzer (Microtrack UPA, Nikkiso Co., Ltd.) was 80 nm.

### [Reference Example 3]

### - Carbon Black 3 Treated with Diazo Compound -

First, 100 g of carbon black having specific surface area of 230 m² /g and DBP oil absorption of 70 ml/100 g and 34 g of p-amino-N-benzoic acid were mixed and dispersed in 750 g of water, and 16 g of nitric acid were dripped to the mixture and stirred at 70°C. After five minutes holding, a solution of 11 g of sodium nitrite dissolved in 50 g of water was added thereto, followed by further stirring for one hour. The resulting slurry was diluted by a factor of 10, and subjected to centrifugation to remove large particles. The pH was adjusted to 8 to 9 with diethanolamine, followed by desalination and concentration with an ultrafiltration membrane. Thus, a carbon black dispersing liquid having a pigment concentration of 15% was obtained. This liquid was filtrated with a polypropylene filter having pore size of 0.5 micron, and thus the resulting liquid was denoted as carbon black dispersing liquid 3. The total content of Fe, Ca and Si was 100 ppm or less according to ICP measurement. The concentration of nitric acid ions was 10 ppm or less. The average particle size (D50%) measured by the Particle Size Analyzer (Microtrack UPA, Nikkiso Co., Ltd.) was 99 nm.

### [Reference Example 4]

### - Carbon Black 4 Treated with Diazo Compound -

A solution at about 75°C containing 2 liters of water and 43 g of sulfanilic acid was added to 202 g of carbon black having surface area of 230 m²/g and a DBPA of 70 ml/100 g under stirring. This mixture was cooled to room temperature under stirring, and 26.2 g of concentrated nitric acid was added thereto. A solution of 20.5 g of sodium nitrite in water was added. A 4-sulfobenzenediazonium hydroxide inner salt was prepared and reacted with the carbon black. The dispersed system was stirred until bubbling was stopped. The resulting slurry was diluted, and the pH was adjusted to 8 to 9 with lithium hydroxide and large particles were removed by centrifugation, followed by desalination and concentration with an ultrafiltration membrane. Thus, a carbon black dispersing liquid having a pigment concentration of 15% was obtained. This liquid was filtrated with a polypropylene filter having pore size of 0.5 micron, and thus the resulting liquid was denoted as carbon black dispersing liquid 4. The total content of Fe, Ca and Si was 100 ppm or less according to ICP measurement. The concentration of nitric acid ions was 50 ppm or less. The average particle size (D50%) measured by the Particle Size Analyzer (Microtrack UPA, Nikkiso Co., Ltd.) was 95 nm.

### [Reference Example 5]

### - Color Pigment Dispersing Liquid Subjected to Surface Chemical Treatment (Yellow Dispersing Liquid 1, Magenta Dispersing Liquid 1, Cyan Dispersing Liquid 1) -

As a yellow pigment, a pigment was prepared by treating C.I. Pigment Yellow 128 with lower temperature plasma, thereby introducing a carboxyl group. A dispersing liquid of this pigment in de-ionized water was subjected to desalination and concentration with an ultrafiltration membrane to provide a yellow pigment dispersing liquid 1 having a pigment concentration of 15%. The total content of Fe, Ca and Si of the yellow pigment dispersing liquid 1 was 100 ppm or less according to ICP measurement. The average particle size (D50%) measured by the Particle Size Analyzer (Microtrack UPA, Nikkiso Co., Ltd.) was 70 nm.

In the same manner, a magenta dispersing liquid 1 having a pigment concentration of 15% was prepared as a magenta pigment, using C.I. Pigment Magenta 122. The total content of Fe, Ca and Si of the magenta dispersing liquid 1 was 100 ppm or less according to ICP measurement. The average particle size (D50%) measured by the Particle Size Analyzer (Microtrack UPA, Nikkiso Co., Ltd.) was 60 nm.

In the same manner, a cyan dispersing liquid 1 having a pigment concentration of 15% was prepared as a cyan pigment, using C.I. Pigment Cyan 15:3. The total content of Fe, Ca and Si of the cyan dispersing liquid 1 was 100 ppm or less according to ICP measurement. The average particle size (D50%) measured by the Particle Size Analyzer (Microtrack UPA, Nikkiso Co., Ltd.) was 80 nm.

### [Reference Example 6]

### - Dispersant Pigment Dispersing Liquid -

Surfactant Dispersion: Yellow Dispersing Liquid 2, Magenta Dispersing Liquid 2, Cyan Dispersing Liquid 2
Polymer Dispersion: Yellow Dispersing Liquid 3, Magenta Dispersing Liquid 3, Cyan Dispersing Liquid 3

### « Employed Pigments and Dispersants >>

yellow pigment: C.I. Pigment Yellow 128
magenta pigment: C.I. Pigment Red 122
cyan pigment: C.I. Pigment Blue 15:3,
dispersant A: nonionic surfactant Emulgen 913, HLB15.5 (by Kao Co.)
dispersant B: acrylic resin aqueous solution, solid content 20%, Joncryl 611, (neutralized with ammonia, acid value 57 , by Johnson Polymer Co.)

### (1) Salt Milling Particle-Size Reduction Processing

First, 250 parts of the pigment, 2500 parts of sodium chloride, and 200 parts of diethylene glycol were fed in a 1 gallon kneader made of stainless steel (by Inoue Seisakusho Co. Ltd.), and kneaded for three hours. Next, this mixture was fed into 2.5 liters of hot water, and was stirred by a high-speed mixer for about one hour while being heated to about 80°C thereby to form slurry. Then, filtration and washing with water were repeated five times to remove sodium chloride and the solvent, thereby a dried pigment was obtained.

### (2) Surface Treatment Processing

First, 20 parts of the pigment, 5 parts (in terms of solid content) of the dispersants A and B noted above and water were added to a paint conditioner such that the total amount was 100 parts and the mixture was dispersed for three hours. The resulting aqueous pigment dispersion was subjected to centrifugation at 15000 rpm for six hours.

Then, 0.1 part of 30% ammonia water and 79.9 parts of purified water were added to 20 parts of the surface-treated pigment of Reference Example 5, and dispersed again in a paint conditioner, thereby a pigment concentrated solution was prepared. For the pigment that had not been subjected to surface treatment, 5 parts (in terms of solid content) of the dispersants A (formulation 1) or the dispersant B (formulation 2) and purified water were added to 20 parts of the pigment such that the total amount was 100 parts and this mixture was dispersed in a paint condition, followed by purification with a reverse osmosis membrane. Thus, a concentrated recording liquid for inkjet was prepared. The concentrated liquid was filtrated with a nylon filter having pore size of 1 micron and further filtrated with a polypropylene filter having pore size of 0.5 micron thereby to provide a dispersing liquid for use. The contents of Fe, Ca, and Si in the respective dispersing liquids were 100 ppm or less.

The average particle sizes of the dispersing liquids measured by the Particle Size Analyzer (Microtrack UPA, Nikkiso Co., Ltd.) were as follows:

| | |
|---|---|
| yellow dispersing liquid: | 2: 93 nm, 3: 80nm |
| magenta dispersing liquid: | 2: 60 nm, 3: 56 nm |
| cyan dispersing liquid: | 2: 90 nm, 3: 87 nm |

### [Reference Example 7]

First, 20 parts by mass of methylethylketone as a solvent under polymerization, a polymeric unsaturated monomer having the following composition at initial stage, and a polymerization chain transfer agent were poured into a sealable reaction vessel quipped with a stirring blade, a tube for cooling medium, and a tube for introducing nitrogen gas; and nitrogen gas purge was performed sufficiently.

| | |
|---|---|
| Methyl methacrylate monomer | 12.8 parts |
| 2-hydroxyethyl methacrylate monomer | 1.2 parts |
| Methacrylic acid monomer | 2.9 parts |
| Silicone macromer (FM-0711, Chisso Co.) | 2 parts |
| Styrene-acrylonitrile macromer (AN-6, Toagosei Co.) | 1 part |
| Mercaptoethanol ^{1*)} | 0.3 part |

| | |
|---|---|
| 1*) polymerization chain transfer agent | |

The mixed solution in the reaction vessel was warmed to 65 °C, while being stirred in a nitrogen atmosphere. Separately, the monomer and chain transfer agent for polymerization of the following composition, 60 parts of methyl ethyl ketone, and 0.2 parts of 2,2'-azobis(2,4-dimethyl valeronitrile) were mixed, and sufficient purge with nitrogen was performed, then the resulting mixed solution was gradually dripped in the reaction vessel over three hours.

| | |
|---|---|
| Methyl methacrylate monomer | 51 parts |
| 2-hydroxyethyl methacrylate monomer | 4.2 parts |
| Methacrylic acid monomer | 11 parts |
| Silicone macromer (FM-0711, Chisso Co.) | 8 parts |
| Styrene-acrylonitrile macromer (AN-6, Toagosei Co.) | 4 parts |
| Mercaptoethanol ^{1*)} | 1.2 parts |

| | |
|---|---|
| 1*) polymerization chain transfer agent | |

After two hour from the end of dropping, a solution of 0.1 part by mass of 2,2'-azobis(2,4-dimethyl valeronitrile) dissolved in 5 parts by mass of methyl ethyl ketone was added thereto, and further aged at 65 °C for two hours and at 70°C for two hours, thereby a vinyl polymer solution was obtained.

Apart of the obtained vinyl polymer solution was dried at 105°C for two hours under a vacuumed pressure to remove the solvent completely for isolation. The weight-averaged molecular weight was about 10,000 and the glass transition point Tg was 180°C.

Then, the resulting vinyl polymer is dried under a vacuumed pressure, then to 5 g of the resulting dried vinyl polymer, 25 g of toluene and 5 g of anthraquinone dye were added to dissolve the dried vinyl polymer completely, and 2 g of a sodium hydroxide solution were added to neutralize a part of the acidic groups of the vinyl polymer. Then, 300 g of de-ionized water was added and the mixture was stirred, followed by emulsificating for 30 minutes using the Nanomaker TM (by Nanomizer Co., Ltd.), which is an emulsifying apparatus. The resulting emulsified product was concentrated, by removing toluene completely at 60°C under a vacuumed pressure, and by removing a part of water. Then, impurities such as monomer were removed with an ultrafiltration membrane and thus a magenta dispersing liquid 4 of vinyl polymer particles impregnated with purified dispersing dye (average particle size of 98 nm, a solid concentration of 10%) was obtained.

In the similar manner, a yellow dispersing liquid 4 (average particle size of 98 nm, a solid concentration of 10%) was obtained except for changing into C.I. Disperse Yellow 118 as the dye, and a blue dispersing liquid 4 (average particle size of 98 nm, a solid concentration of 10%) was obtained except for changing into C.I. Disperse Blue 36 as the dye.

### [Example 1]

The following ingredients were blended and allowed to stand for one day to prepare the composition, then the composition was adjusted for its pH to 9.0 by adding the compound of Formula (1)-1 described above and was filtered through a polypropylene membrane having a pore size of 0.5 µm to prepare black ink 1. The amounts of dispersion expressed by % in Examples and Comparative Examples are in terms of solid content.

| | |
|---|---|
| Carbon dispersion 1 (as solid content) | 8 % |
| Resin Emulsion | 5 % |
| Compound of Formula (1)-1 | 0.1 % |
| Glycerol | 15 % |
| N-hydroxyethyl pyrrolidone | 5 % |
| 2-ethyl-1,3-hexane diol | 1 % |
| Surfactant expressed by Formula (2)-2 below | 1 % |
| Sodium dehydroacetate | 0.2 % |
| De-ionized water | Balance |

Formula (2)-2 : CH₃(CH₂)₁₂O(CH₂CH₂O)₄CH₂COOH

### [Example 2]

Black ink 2 was prepared in the same manner as Example 1, except that the following ingredients were employed and the pH was adjusted to 8.8 using lithium hydroxide.

| | |
|---|---|
| Carbon dispersion 2 (as solid content) | 7 % |
| Resin Emulsion | 3 % |
| 1,2,6-hexane triol | 8 % |
| 1,5-pentane diol | 10 % |
| 2-ethyl-1,3-hexane diol | 1.5 % |
| 2-pyrrolidone | 8 % |
| Surfactant expressed by Formula (2)-3 below | 1 % |
| Surfactant expressed by Formula (3)-1 below | 1.2 % |
| Compound of Formula (1)-3 (25 % aqueous solution) | 0.8 % |
| Urea | 5 % |
| 2-pyridinethiol-1-oxidesodium | 0.2 % |
| De-ionized water | Balance |

Formula (2)-3 : CH₃(CH₂)₁₂O(CH₂CH₂O)₅CH₂COOH

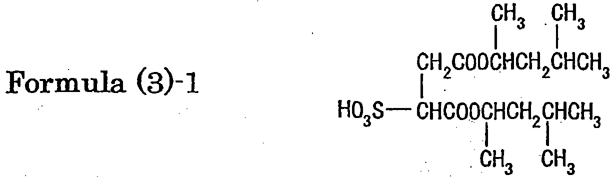

### [Example 3]

Black ink 3 was prepared in the same manner as Example 1, except that the following ingredients were employed and the pH was adjusted to 9.5 using lithium hydroxide.

| | |
|---|---|
| Carbon dispersion 3 (as solid content) | 8 % |
| Diethylene glycol | 15 % |
| Glycerol | 5 % |
| 2-ethyl-1,3-hexane diol | 2 % |
| 2-pyrrolidone | 2 % |
| Polymer of styrene acrylacid | 1.5 % |
| Surfactant expressed by Formula (2)-2 below | 1 % |
| Surfactant expressed by Formula (4) below | 1 % |
| Compound of Formula (1)-3 (25 % aqueous solution) | 0.1 % |
| Sodium dehydroacetate | 0.2 % |
| De-ionized water | Balance |

Formula (2)-2 : CH₃(CH₂)₁₂O(CH₂CH₂O)₄CH₂COOH

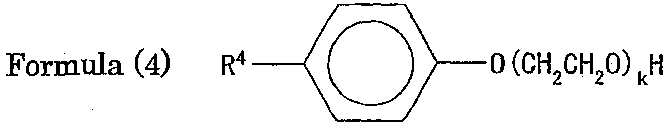

in which R⁴ is C₅H₁₉, k is 12.

### [Example 4]

Yellow ink 1 was prepared in the same manner as Example 1, except that the following ingredients were employed and the pH was adjusted to 9.5 using lithium hydroxide.

| | |
|---|---|
| Yellow dispersion 1 (as solid content) | 5 % |
| Ethylene glycol | 5 % |
| Glycerol | 2 % |
| 1,5-pentane diol | 8 % |
| 2-pyrrolidone | 2 % |
| 2-ethyl-1,3-hexane diol | 2 % |
| Block copolymer of polyoxyethylene-polyoxypropylene | 1 % |
| Surfactant expressed by Formula (2)-4 below | 1 % |
| Surfactant expressed by Formula (5) below | 0.8 % |
| Compound of Formula (1)-4 (25 % aqueous solution) | 2 % |
| Urea | 5 % |
| Sodium benzoate | 0.2 % |
| De-ionized water | Balance |

Formula (2)-4: CH₃(CH₂)₁₂O(CH₂CH₂O)₆CH₂COOH

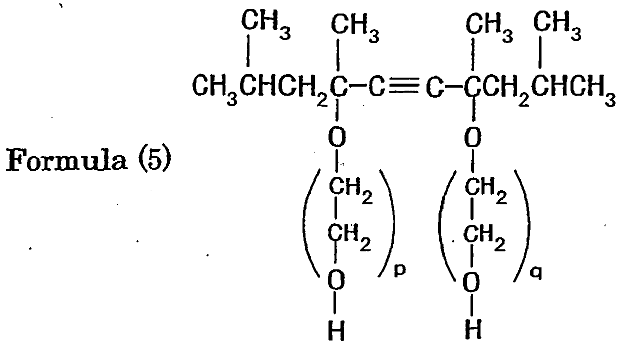

in which p + q = 20

Magenta ink 1 was prepared in the same manner as Example 1, except that the following ingredients were employed and the pH was adjusted to 9.1 using lithium hydroxide.

| | |
|---|---|
| Magenta dispersion 1 (as solid content) | 5 % |
| Ethylene glycol | 5 % |
| Glycerol | 15 % |
| 2-pyrrolidone | 2 % |
| 2-ethyl-1,3-hexane diol | 2 % |
| Block copolymer of polyoxyethylene-polyoxypropylene | 1 % |
| Surfactant expressed by Formula (2)-4 below | 1 % |
| Surfactant expressed by Formula (5) below | 0.8 % |
| Compound of Formula (1)-4 (25 % aqueous solution) | 2 % |
| Urea | 5 % |
| Sodium benzoate | 0.2 % |
| De-ionized water | Balance |

Formula (2)-4 : CH₃(CH₂)₁₂O(CH₂CH₂O)₆CH₂COOH

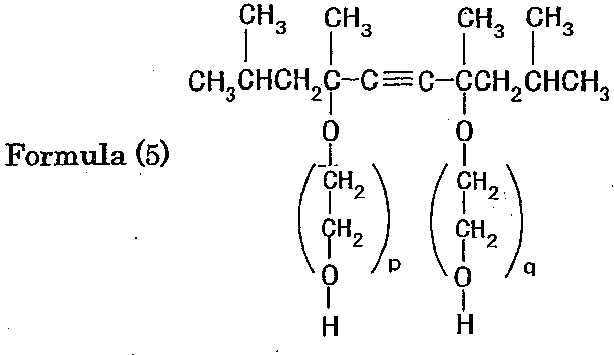

in which p + q = 20

Cyan ink 1 was prepared in the same manner as Example 1, except that the following ingredients were employed and the pH was adjusted to 9.1 using lithium hydroxide.

| | |
|---|---|
| Cyan dispersion 1 (as solid content) | 5 % |
| Compound of Formula (1)-1 | 0.1 % |
| Glycerol | 15 % |
| N-hydroxyethyl pyrrolidone | 5 % |
| 2-ethyl-1,3-hexane diol | 1 % |
| Surfactant expressed by Formula (2)-2 below | 1 % |
| Sodium dehydroacetate | 0.2 % |
| De-ionized water | Balance |

Formula (2)-2 : CH₃(CH₂)₁₂O(CH₂CH₂O)₄CH₂COOH

### [Example 5]

Yellow ink 2 was prepared in the same manner as Example 1, except that the following ingredients were employed and the pH was adjusted to 7.8 using sodium hydroxide.

| | |
|---|---|
| Yellow dispersion 2 (as solid content) | 10 % |
| Triethylene glycol | 5 % |
| 3-methylpentane-1,3,5-triol | 10 % |
| N-methyl-2-pyrrolidone | 5 % |
| Diethyleneglycol monohexylether | 2 % |
| Compound of Formula (1)-5 | 0.4 % |
| Surfactant expressed by Formula (4) below | 1 % |
| Compound of Formula (1)-2 (25 % aqueous solution) | 1.5 % |
| Hydroxyethylurea | 5 % |
| 2-pyridinethiol-1-sodiumoxide | 0.2 % |
| De-ionized water | Balance |

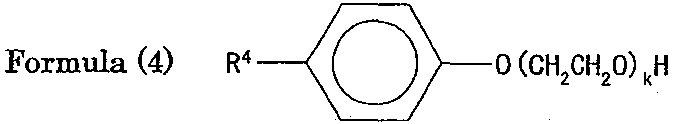

in which R⁴ is C₁₀H₂₁, k is 7.

Magenta ink 2 was prepared in the same manner as Example 1, except that the following ingredients were employed and the pH was adjusted to 7.8 using sodium hydroxide.

| | |
|---|---|
| Magenta dispersion 2 (as solid content) | 10 % |
| Triethylene glycol | 5 % |
| 3-methylpentane-1,3,5-triol . | 10 % |
| N-methyl-2-pyrrolidone | 5 % |
| Diethylene glycol monohexylether | 2 % |
| Compound of Formula (1)-5 | 0.4 % |
| Surfactant expressed by Formula (4) below | 1 % |
| Compound of Formula (1)-2 (25 % aqueous solution) | 1.0 % |
| Hydroxyethylurea | 5 % |
| 2-pyridinethiol-1-sodiumoxide | 0.2 % |
| De-ionized water | Balance |

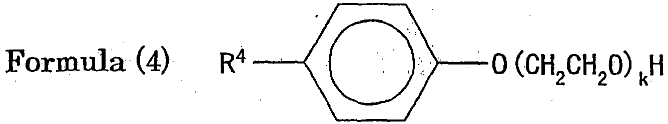

in which R⁴ is C₁₀H₂₁, k is 7.

Cyan ink 2 was prepared in the same manner as Example 1, except that the following ingredients were employed and the pH was adjusted to 9.1 using lithium hydroxide.

| | |
|---|---|
| Cyan dispersion 2 (as solid content) | 10 % |
| Triethylene glycol | 5 % |
| 3-methylpentane-1,3,5-triol | 10 % |
| N-methyl-2-pyrrolidone | 5 % |
| Diethyleneglycol monohexylether | 2 % |
| Compound of Formula (1)-5 | 1 % |
| Surfactant expressed by Formula (4) below | 1 % |
| Compound of Formula (1)-2 (25 % aqueous solution) | 1 % |
| Hydroxyethylurea | 5 % |
| 2-pyridinethiol-1-sodiumoxide | 0.2 % |
| De-ionized water | Balance |

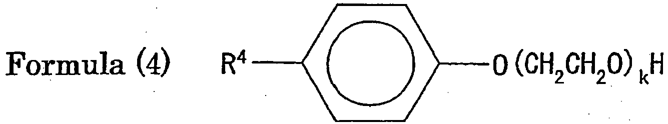

in which R⁴ is C₁₀H₂₁, k is 7.

### [Example 6]

Yellow ink 3 was prepared in the same manner as Example 1, except that the following ingredients were employed and the pH was adjusted to 8.0 using lithium hydroxide.

| | |
|---|---|
| Yellow dispersion 3 (as solid content) | 8 % |
| 2-pyrrolidone | 8 % |
| Glycerol | 7 % |
| 1,3-butanediol | 3 % |
| Surfactant expressed by Formula (2)-1 | 0.3 % |
| Formula (2)-1 : CH₃ (CH₂)₁₂O(CH₂CH₂O)₃CH₂COOH | |
| Surfactant expressed by Formula (5) | 0.5 % |
| 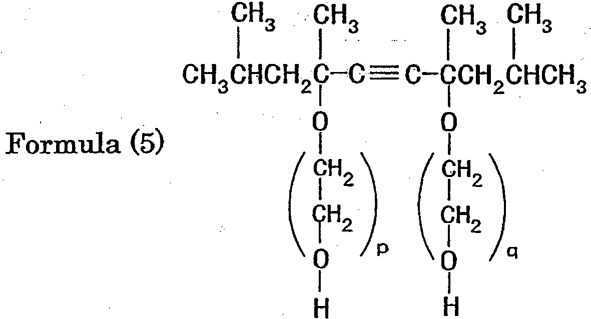 | |

| | |
|---|---|
| in which p + q = 15 | |
| Surfactant expressed by Formula (5) | 0.5 % |
| 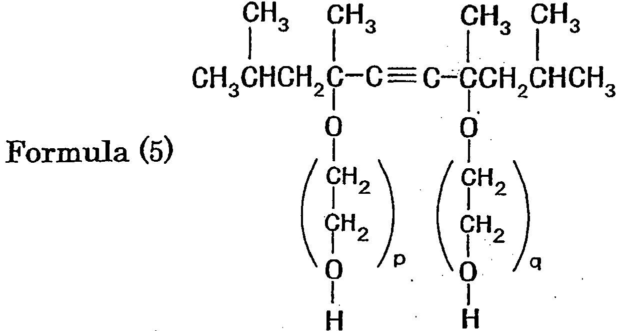 | |
| in which p + q = 0 | |
| Compound of Formula (1)-7 (25 % aqueous solution) | 2 % |
| Hydroxyethylurea | 5 % |
| Sodium dehydroacetate | 0.2 % |
| De-ionized water | Balance |

Magenta ink 3 was prepared in the same manner as Example 1, except that the following ingredients were employed and the pH was adjusted to 8.0 using lithium hydroxide.

| | |
|---|---|
| Magenta dispersion 3 (as solid content) | 6 % |
| 2-pyrrolidone | 8 % |
| Glycerol | 7 % |
| 1,3-butanediol | 3 % |
| Compound of Formula (1)-1 | 0.3 % |
| Surfactant expressed by Formula (5) | 0.5 % |

| | |
|---|---|
| 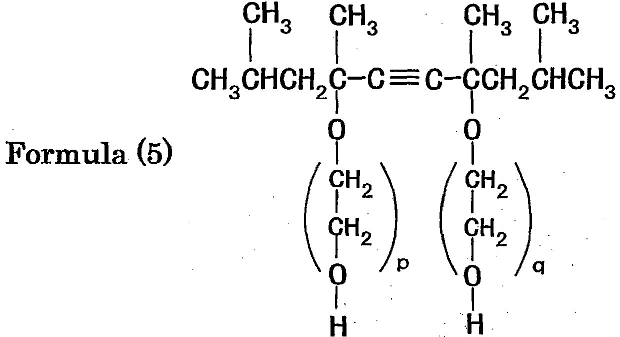 | |
| in which p + q = 15 | |
| Surfactant expressed by Formula (5) | 0.5 % |
| 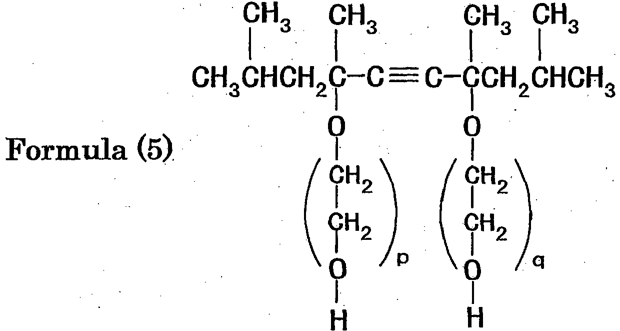 | |
| in which p + q = 0 | |
| Compound of Formula (1)-7 (25 % aqueous solution) | 2 % |
| Hydroxyethylurea | 5 % |
| Sodium dehydroacetate | 0.2 % |
| De-ionized water | Balance |

Cyan ink 3 was prepared in the same manner as Example 1, except that the following ingredients were employed and the pH was adjusted to 8.0 using lithium hydroxide.

| | |
|---|---|
| Cyan dispersion 3 (as solid content) | 8 % |
| 2-pyrrolidone | 8 % |
| Glycerol | 7 % |
| 1,3-butanediol | 3 % |
| Surfactant expressed by Formula (2)-1 | 0.3 % |
| Formula (2)-1: CH₃(CH₂)₁₂O(CH₂CH₂O)₃CH₂COOH | |
| Tetramethyl ammoniumnitrate (electric-conductivity modifier) | 0.4 % |
| Surfactant expressed by Formula (5) | 0.5 % |
| 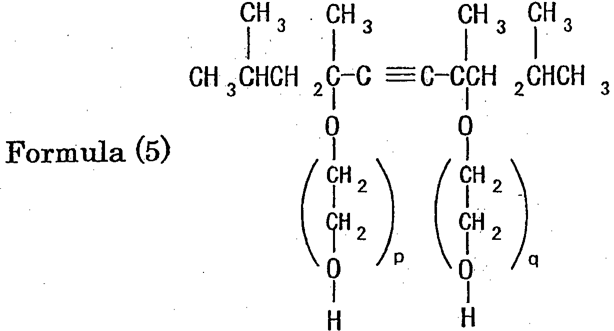 | |
| in which p + q = 15 | |
| 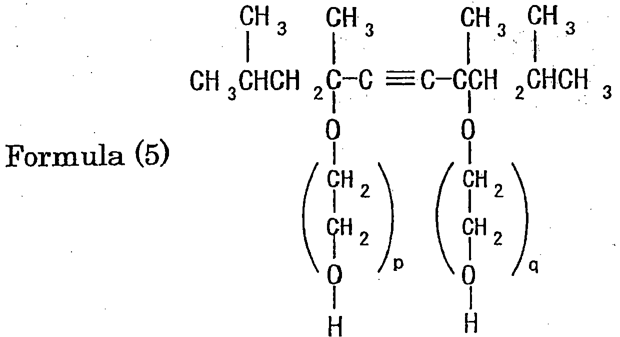 | |
| in which p + q = 0 | |
| Compound of Formula (1)-7 (25 % aqueous solution) | 2 % |
| Hydroxyethylurea | 5 % |
| Sodium dehydroacetate | 0.2 % |
| De-ionized water | Balance |

### [Example 7]

Yellow ink 4 was prepared in the same manner as Example 1, except that the following ingredients were employed and the pH was adjusted to 9.5 using lithium hydroxide.

| | |
|---|---|
| Yellow dispersion 4 (as solid content) | 8 % |
| Ethylene glycol | 5 % |
| Glycerol | 2 % |
| 1,3-propane diol | 8 % |
| 2-pyrrolidone | 2 % |
| Block copolymer of polyoxyethylene-polyoxypropylene | 1 % |
| Surfactant expressed by Formula (2)-4 below | 0.5 % |
| Compound of Formula (1)-4 (25 % aqueous solution) | 2 % |
| Urea | 5 % |
| Sodium benzoate | 0.2 % |
| De-ionized water | Balance |

Formula (2)-4 : CH₃ (CH₂)₁₂O(CH₂CH₂O)₆CH₂COOH

Magenta ink 4 was prepared in the same manner as Example 1, except that the following ingredients were employed and the pH was adjusted to 9.1 using lithium hydroxide.

| | |
|---|---|
| Magenta dispersion 4 (as solid content) | 8 % |
| Ethylene glycol | 5 % |
| Glycerol | 15 % |
| 2-pyrrolidone | 2 % |
| Block copolymer of polyoxyethylene-polyoxypropylene | 1 % |
| Surfactant expressed by Formula (2)-4 below | 0.3 % |
| Formula (2)-4 : CH₃(CH₂)₁₂O(CH₂CH₂O)₆CH₂COOH | |
| Surfactant expressed by Formula (5) below | 0.2 % |
| 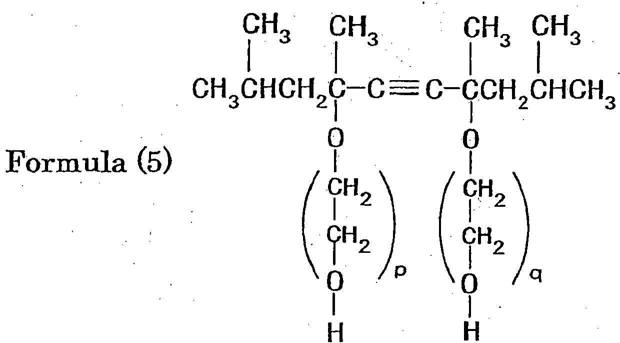 | |
| in which p + q = 20 | |
| Compound of Formula (1)-4 (25 % aqueous solution) | 2 % |
| Urea | 5 % |
| Sodium benzoate | 0.2 % |
| De-ionized water | Balance |

Cyan ink 4 was prepared in the same manner as Example 1, except that the following ingredients were employed and the pH was adjusted to 8.4 using lithium hydroxide.

| | |
|---|---|
| Cyan dispersion 4 (as solid content) | 5 % |
| Compound of Formula (1)-1 | 0.1 % |
| Glycerol | 15 % |
| N-hydroxyethyl pyrrolidone | 5 % |
| 2-ethyl-1,3-hexanediol | 1 % |
| Surfactant expressed by Formula (II-2) | 1 % |
| Sodium dehydroacetate | 0.2 % |
| De-ionized water | Balance |

Formula (2)-2: CH₃(CH₂)₁₂O(CH₂CH₂O)₄CH₂COOH

### [Comparative Example 1]

Black ink 4 was prepared in the same manner as Example 1, except that the surfactants and 2-ethyl-1,3-hexanediol were eliminated from the ink of Example 1.

### [Comparative Example 2]

Black ink 5 was prepared in the same manner as Example 2, except that the surfactants and 2-ethyl-1,3-hexanediol were eliminated from the ink of Example 2.

### [Comparative Example 3]

Black ink 6 was prepared in the same manner as Example 3, except that the surfactants and 2-ethyl-1,3-hexanediol were eliminated from the ink of Example 3.

### [Comparative Example 4]

Comparative ink was prepared in the same manner as Example 4, except that the wetting agents and the surfactants were eliminated from the ink of Example 4.

### [Comparative Example 5]

Comparative ink was prepared in the same manner as Example 5, except that the wetting agents and the surfactants were eliminated from the ink of Example 5.

### [Comparative Example 6]

Comparative ink was prepared in the same manner as Example 6, except that the wetting agents and the surfactants were eliminated from the ink of Example 6.

Evaluations were conducted with respect to ink sets consisting of four colors, which were prepared from the inks of Examples 1 to 7 and Comparative Examples 1 to 6.

### (1) Image Clearness

Printings were performed using (i) an inkjet printer with a thermal inkjet system having 300 nozzles for each color with a nozzle diameter of 18 µm and a 600 dpi (dots per inch) pitch, (ii) an inkjet printer having 300 nozzles for each color with a diameter of 28 µm and a 200 dpi pitch that employs a laminated PZT for applying pressure to the liquid compartment channel, and (iii) an inkjet printer having 300 nozzles for each color that employs an electrostatic actuator for applying pressure to the liquid compartment channel. Then, the bleeding on the boundary portion where two colors are superimposed, the bleeding of images, the tone, and the density were visually observed for integrated evaluation. Furthermore, the color development on OHP projection was evaluated.

### <Rate Based on Organoleptic Estimation>

5: The bleeding is low, image density is high, and also the image clearness and color reproducibility are high at the boundary of superimposed-color and mono-color areas, regardless of the paper types.
4: The image density is somewhat lower than the above Rate 5.
3: Bleeding occurs little at the boundary of different colors; however, nonuniformity such as of secondary colors appears depending on the paper types.
2: Bleeding appears at the boundary of different colors depending on the paper types.
1: Image density is low and image clearness is poor in addition to above Rate 2.

### (2) Infiltrating Property

Using the five types of test paper, the infiltrating periods were determined for respective inks by measuring the period from the moment when the first recording side of the recording medium has been printed to the moment when the test paper was brought into contact with the first recording side and the contacted test paper has come not to carry any traces on separating from the first recording side. The infiltrating periods were averaged over the five types of test paper, and the infiltrating property of respective inks were ranked as follows:
3: 1 second or less
2: 1 to 5 seconds
1: 5 to 10 seconds

Five types of test paper for evaluation were (i) PPC 6200 paper (by Ricoh Co., Ltd.), (ii) PPC 6000 paper (70W, by Ricoh Co., Ltd.), (iii) MY RECYCLE paper (by NBS Ricoh), (iv) 4024 paper (by Xerox Co.), (v) PB paper (by Canon Inc.).

### (3) Rubfastness property

Solid black images were abraded 10 times using cotton cloth and Clock meter (by Toyo Seiki Co., Ltd.), then the decrease of image density and the smear of cotton cloth were measured. The rate was evaluated as follows. The rubfastness test was conducted to evaluate properly the possibility of offset in addition to the measurement of infiltrating period.
3: no decrease of image density, and no smear of cotton cloth
2: decrease of image density being 0.1 or less, and a little smear of cotton cloth
1: decrease of image density being more than 0.1, and significant smear of cotton cloth

**Table 1**

| Ink Set | Image Clearness | Infiltrating Property | Rubfastness Property | Occurrence of Abnormal Images |
|---|---|---|---|---|
| Examples 1,4 | 5 | 3 | 3 | No Existence |
| Examples 2,5 | 5 | 3 | 3 | No Existence |
| Examples 3,6 | 5 | 3 | 3 | No Existence |
| Examples 1,7 | 5 | 3 | 3 | No Existence |
| Comp.Ex. 1,4 | 3 | 1 | 1 | Exist |
| Comp.Ex. 2,5 | 2 | 1 | 1 | Exist |
| Comp.Ex. 3,6 | 4 | 1 | 1 | Exist |

## Claims

1. A recording ink for ink-jet recording comprising:
a colorant, water, a humectant, a surfactant, and a wetting agent,
wherein the colorant is at least one of carbon black treated with hypochlorous acid, carbon black treated with sulfonating agent, and carbon black having a free anionic group introduced by treating with a diazonium compound, **characterized in that**
the decrease of image density under rubfastness test is 0.1 or less, wherein according to the rubfastness test solid black images were abraded 10 times using cotton cloth and Clock meter, and then the decrease of image density is measured,
wherein the content of the water is 65 parts by mass or less and the content of the humectant is 20 parts by mass or more based on 100 parts by mass of the total recording ink,
wherein the recoding ink is applied to an ink-jet recording apparatus capable of recording on a second recording side of a recording medium following recording on a first recording side of the recording medium, and
the infiltrating period of the recording ink into the first recording side of the recording medium is 5 seconds or less, wherein the infiltrating period is defined as the period from the moment when the first recording side of the recording medium has been printed to the moment when a filter paper is brought into contact with the first recording side and the contacted filter paper has come not to carry any traces on separating from the first recording side.

2. The recording ink according to claim 1, wherein the recording ink is utilized in an ink-jet recording apparatus that conveys recording media by charging a surface of an endless conveying belt and records images on the recording media by ejecting ink droplets from a recording head.

3. The recording ink according to claim 1, wherein the anionic group comprises a carboxyl group.

4. The recording ink according to claim 1, wherein the volume-averaged particle diameter of the colorant is 10 nm to 300 nm.

5. The recording ink according to one of claims 1 to 4, wherein the surfactant is at least one of anionic surfactants, nonionic surfactants, ampholytic surfactants, and fluorine-containing surfactants.

6. The recording ink according to claim 5, wherein the surfactant is at least one of anionic surfactants selected from polyoxyethylene alkyletheracetates and dialkyl sulfosuccinates.

7. The recording ink according to claim 5, wherein the surfactant is at least one of nonionic surfactants selected from acetylene glycols, polyoxyethylene alkylethers, polyoxyethylene alkylphenylethers, and polyethylene-polypropylene copolymers.

8. The recording ink according to one of claims 1 to 7, wherein the humectant is selected from glycerin, ethylene glycol, diethylene glycol, triethylene glycol, propylene glycol, dipropylene glycol, tripropylene glycol, 1,3-butanediol, 2,3-butanediol, 1,4-butanediol, 1,5-pentanediol, tetraethylene glycol, 1,6-hexanediol, 2-methyl-2,4-pentanediol, polyethylene glycol, 1,2,4-butanetriol, 1,2,6-hexanetriol, thiodiglycol, 2-pyrrolidone, N-methyl-2-pyrrolidone, N-hydroxyethyl-2-pyrrolidone, and 1,3-dimethylimidazolidinone.

9. The recording ink according to one of claims 1 to 8, wherein the wetting agent is at least one of diol compounds and alkylethers having 6 or more carbon atoms in the respective molecules.

10. The recording ink according to claim 9, wherein the diol compounds are 2-ethyl-1,3-hexanediol and 2,2,4-trimethyl-1,3-pentanediol.

11. The recording ink according to claim 9, wherein the alkylethers are diethylene glycol monohexylether and propyleneglycol monohexylether.

12. The recording ink according to one of claims 1 to 11, wherein at least one of soluble resins and resin emulsions is incorporated into the recording ink.

13. The recording ink according to one of claims 1 to 12, wherein the viscosity of the recording ink is 1 mPa·s to 20 mPa·s at 25 °C.

14. The recording ink according to one of claims 1 to 12, wherein the surface tension of the recording ink is 50 mN/m or less.

15. The recording ink according to one of claims 1 to 14, wherein the recording ink is at least one of cyan inks, magenta inks, yellow inks, and black inks.

16. An ink cartridge, wherein the ink cartridge is formed by encapsulating the recording ink according to one of claims 1 to 15 within a container.

17. An ink-jet recording apparatus comprising an ink-droplet ejecting unit configured to eject ink droplets for forming images on recording media through stimulating the recording ink according to one of claims 1 to 15.

18. The ink-jet recording apparatus according to claim 17, wherein the stimulating is generated by means of at least one of heating, pressuring, vibrating, and irradiating.

19. The ink-jet recording apparatus according to one of claims 17 and 18, wherein the ink-jet recording apparatus comprises a conveying unit equipped with a reversing mechanism configured to reverse a recording medium so as to make the second recording side of the recording medium possible to be record following recording on the first recording side of the recording medium.

20. The ink-jet recording apparatus according to claim 19, wherein the conveying unit comprises a conveying belt that makes use of electrostatic force.

21. The ink-jet recording apparatus according to claim 20, wherein the conveying belt is charged by applying an AC bias of ± 1.2 kV to ± 2.6 kV to a charging roller

22. The ink-jet recording apparatus according to claim 19, wherein the conveying unit is configured to make use of evacuated air in order to sustain the recording media.

23. The ink-jet recording apparatus according to one of claims 21 and 22, wherein the conveying belt adsorbs the recording medium by force of 15 N or more.

24. The ink-jet recording apparatus according to claim 19, wherein the conveying unit comprises paper-conveying roller(s) and paper-discharging roller(s)

25. The ink-jet recording apparatus according to one of claims 17 to 24, wherein a sub-tank is disposed at a site of above a recording head in order to feed an ink to the recording head, and the ink is fed from an ink cartridge to the sub-tank through a feeding tube.

26. An ink-jet recording process comprising stimulating the recording ink according to one of claims 1 to 15, ejecting ink droplets, and forming images.

27. The ink-jet recording process according to claim 26, wherein the stimulating is generated by means of at least one of heating, pressuring, vibrating, and irradiating.

28. A recorded matter comprising an image, formed from the recording ink according to one of claims 1 to 15, on a recording medium.

## Patentansprüche

1. Aufzeichnungstinte für die Tintenstrahlaufzeichnung, umfassend: ein farbgebendes Mittel, Wasser, ein Feuchthaltemittel, ein Tensid und ein Benetzungsmittel,
wobei das farbgebende Mittel mindestens eines aus Ruß behandelt mit Hypochlorsäure, Ruß behandelt mit Sulfonierungsmittel und Ruß mit einer freien anionischen Gruppe eingeführt durch Behandeln mit einer Diazoniumverbindung ist, **dadurch gekennzeichnet, dass**
die Abnahme der Bilddichte beim Reibechtheitstest 0,1 oder weniger beträgt, wobei nach dem Reibechtheitstest schwarze Volltonbilder 10-mal unter Verwendung von Baumwolltuch und Clock-Messgerät abgerieben wurden und dann die Abnahme der Bilddichte gemessen wird,
wobei der Gehalt an Wasser 65 Massenteile oder weniger und der Gehalt des Feuchthaltemittels 20 Massenteile oder mehr bezogen auf 100 Massenteile der gesamten Aufzeichnungstinte beträgt,
wobei die Aufzeichnungstinte in eine Tintenstrahl-Aufzeichnungsvorrichtung angebracht ist, die in der Lage ist, auf einer zweiten Aufzeichnungsseite eines Aufzeichnungsmediums im Anschluss an eine Aufzeichnung auf einer ersten Aufzeichnungsseite des Aufzeichnungsmediums aufzuzeichnen, und
die Infiltrationszeit der Aufzeichnungstinte in die erste Aufzeichnungsseite des Aufzeichnungsmediums 5 Sekunden oder weniger ist, wobei die Infiltrationszeit definiert ist als der Zeitraum von dem Augenblick an, wenn die erste Aufzeichnungsseite des Aufzeichnungsmediums bedruckt worden ist, bis zu dem Augenblick, wenn ein Filterpapier mit der ersten Aufzeichnungsseite in Kontakt gebracht wird und das kontaktierte Filterpapier bei Trennung keine Spuren von der ersten Aufzeichnungsseite aufweist.

2. Aufzeichnungstinte nach Anspruch 1, wobei die Aufzeichnungstinte in einer Tintenstrahl-Aufzeichnungsvorrichtung verwendet wird, die Aufzeichnungsmedien durch Aufladen einer Oberfläche eines Endlosförderbandes befördert und Bilder auf den Aufzeichnungsmedien durch Ausstoßen von Tintentröpfchen von einem Aufzeichnungskopf aufzeichnet.

3. Aufzeichnungstinte nach Anspruch 1, wobei die anionische Gruppe eine Carboxylgruppe umfasst.

4. Aufzeichnungstinte nach Anspruch 1, wobei das Volumenmittel des Teilchendurchmessers des farbgebenden Mittels 10 nm bis 300 nm beträgt.

5. Aufzeichnungstinte nach einem der Ansprüche 1 bis 4, wobei das Tensid mindestens eines von anionischen Tensiden, nichtionischen Tensiden, ampholytischen Tensiden und fluorhaltigen Tensiden ist.

6. Aufzeichnungstinte nach Anspruch 5, wobei das Tensid mindestens eines von anionischen Tensiden ausgewählt aus Polyoxyethylenalkyletheracetaten und Dialkylsulfosuccinaten ist.

7. Aufzeichnungstinte nach Anspruch 5, wobei das Tensid mindestens eines von nichtionischen Tensiden ausgewählt aus Acetylenglycolen, Polyoxyethylenalkylethern, Polyoxyethylenalkylphenylethern und Polyethylen-Polypropylen-Copolymeren ist.

8. Aufzeichnungstinte nach einem der Ansprüche 1 bis 7, wobei das Feuchthaltemittel ausgewählt ist aus Glycerin, Ethylenglycol, Diethylenglycol, Triethylenglycol, Propylenglycol, Dipropylenglycol, Tripropylenglycol, 1,3-Butandiol, 2,3-Butandiol, 1,4-Butandiol, 1,5-Pentandiol, Tetraethylenglycol, 1,6-Hexandiol, 2-Methyl-2,4-pentandiol, Polyethylenglycol, 1,2,4-Butantriol, 1,2,6-Hexantriol, Thiodiglycol, 2-Pyrrolidon, N-Methyl-2-pyrrolidon, N-Hydroxyethyl-2-pyrrolidon und 1,3-Dimethylimidazolidinon.

9. Aufzeichnungstinte nach einem der Ansprüche 1 bis 8, wobei das Benetzungsmittel mindestens eine von Diolverbindungen und Alkylethern mit 6 oder mehr Kohlenstoffatomen in den jeweiligen Molekülen ist.

10. Aufzeichnungstinte nach Anspruch 9, worin die Diolverbindungen 2-Ethyl-1,3-hexandiol und 2,2,4-Trimethyl-1,3-pentandiol sind.

11. Aufzeichnungstinte nach Anspruch 9, worin die Alkylether Diethylenglycolmonohexylether und Propylenglycolmonohexylether sind.

12. Aufzeichnungstinte nach einem der Ansprüche 1 bis 11, wobei mindestens eine von löslichen Harzen und Harzemulsionen in der Aufzeichnungstinte enthalten ist.

13. Aufzeichnungstinte nach einem der Ansprüche 1 bis 12, wobei die Viskosität der Aufzeichnungstinte 1 mPa·s bis 20 mPa·s bei 25 ° C beträgt.

14. Aufzeichnungstinte nach einem der Ansprüche 1 bis 12, wobei die Oberflächenspannung der Aufzeichnungstinte 50 mN/m oder weniger beträgt.

15. Aufzeichnungstinte nach einem der Ansprüche 1 bis 14, wobei die Aufzeichnungstinte mindestens eine von Cyan-Tinten, Magenta-Tinten, gelben Tinten und schwarzen Tinten ist.

16. Tintenkartusche, wobei die Tintenkartusche durch Ummanteln der Aufzeichnungstinte nach einem der Ansprüche 1 bis 15 in einem Behälter gebildet ist.

17. Tintenstrahl-Aufzeichnungsvorrichtung, umfassend eine Tintentröpfchen-Ausstoßeinheit, die konfiguriert ist, um Tintentröpfchen zum Erzeugen von Bildern auf Aufzeichnungsmedien durch Stimulieren der Aufzeichnungstinte nach einem der Ansprüche 1 bis 15 auszustoßen.

18. Tintenstrahl-Aufzeichnungsvorrichtung nach Anspruch 17, wobei die Stimulierung mittels mindestens eines von Erwärmen, Druckerzeugung, Vibration und Bestrahlen erzeugt wird.

19. Tintenstrahl-Aufzeichnungsvorrichtung nach einem der Ansprüche 17 und 18, wobei die Tintenstrahl-Aufzeichnungsvorrichtung eine Fördereinheit umfasst, die mit einem Umkehrmechanismus ausgerüstet ist, der konfiguriert ist, um ein Aufzeichnungsmedium umzudrehen, um es zu ermöglichen, dass auf der zweiten Aufzeichnungsseite des Aufzeichnungsmediums im Anschluss an die Aufzeichnung auf der ersten Aufzeichnungsseite des Aufzeichnungsmediums aufgezeichnet wird.

20. Tintenstrahl-Aufzeichnungsvorrichtung nach Anspruch 19, wobei die Fördereinheit ein Förderband umfasst, das elektrostatische Kraft nutzt.

21. Tintenstrahl-Aufzeichnungsvorrichtung nach Anspruch 20, wobei das Förderband durch Anlegen einer Wechselstrom-Vorspannung von ± 1,2 kV bis ± 2,6 kV an eine Ladewalze aufgeladen wird.

22. Tintenstrahl-Aufzeichnungsvorrichtung nach Anspruch 19, wobei die Fördereinheit ausgebildet ist, um evakuierte Luft zu nutzen, um die Aufzeichnungsmedien zu halten.

23. Tintenstrahl-Aufzeichnungsvorrichtung nach einem der Ansprüche 21 und 22, wobei das Förderband das Aufzeichnungsmedium mit einer Kraft von 15 N oder mehr adsorbiert.

24. Tintenstrahl-Aufzeichnungsvorrichtung nach Anspruch 19, wobei die Fördereinheit eine oder mehrere Papierförderrolle(n) und Papierabgaberolle(n) umfasst.

25. Tintenstrahl-Aufzeichnungsvorrichtung nach einem der Ansprüche 17 bis 24, wobei ein Untertank an einer Stelle oberhalb eines Aufzeichnungskopfes angeordnet ist, um dem Aufzeichnungskopf eine Tinte zuzuführen, und die Tinte von einer Tintenkartusche durch eine Zufuhrleitung dem Untertank zugeführt wird.

26. Tintenstrahl-Aufzeichnungsverfahren, umfassend das Stimulieren der Aufzeichnungstinte nach einem der Ansprüche 1 bis 15, das Ausstoßen von Tintentröpfchen und das Bilden von Bildern.

27. Tintenstrahl-Aufzeichnungsverfahren nach Anspruch 26, wobei die Stimulierung mittels mindestens eines von Erwärmen, Druckerzeugung, Vibration und Bestrahlen erzeugt wird.

28. Aufgezeichnetes Material, umfassend ein Bild, das von der Aufzeichnungstinte nach einem der Ansprüche 1 bis 15 auf einem Aufzeichnungsmedium gebildet ist.

## Revendications

1. Encre d'enregistrement pour enregistrement à jet d'encre comprenant : un colorant, de l'eau, un humidifiant, un tensioactif et un agent mouillant,
dans laquelle le colorant est au moins choisi parmi le noir de carbone traité avec de l'acide hypochloreux, le noir de carbone traité avec un agent de sulfonation et le noir de carbone ayant un groupe anionique libre introduit par traitement avec un composé diazonium, **caractérisée en ce que**
la diminution de la densité d'image sous un test de solidité au frottement est inférieure ou égale à 0,1, selon le test de solidité au frottement, les images noires solides étant abrasées 10 fois en utilisant un chiffon en coton et un compteur à balancier, et ensuite la diminution de la densité d'image étant mesurée,
dans laquelle la teneur en eau est inférieure ou égale à 65 parties en masse et la teneur en humidifiant est supérieure ou égale à 20 parties en masse par rapport à 100 parties en masse de l'encre d'enregistrement totale,
dans laquelle l'encre d'enregistrement est appliquée sur un appareil d'enregistrement à jet d'encre capable d'enregistrer sur un second côté d'enregistrement d'un support d'enregistrement après l'enregistrement sur un premier côté d'enregistrement du milieu d'enregistrement, et
la période d'infiltration de l'encre d'enregistrement dans le premier côté d'enregistrement est inférieure ou égale à 5 secondes, la période d'infiltration étant définie comme la période à partir du moment où le premier côté d'enregistrement du support d'enregistrement a été imprimé jusqu'au moment où un papier filtre est amené en contact avec le premier côté d'enregistrement et le papier filtre en contact ne montre aucune trace de séparation provenant du premier côté d'enregistrement.

2. Encre d'enregistrement selon la revendication 1, dans laquelle l'encre d'enregistrement est utilisée dans un appareil d'enregistrement à jet d'encre qui transporte les supports d'enregistrement par chargement d'une surface d'une courroie de transport sans fin et enregistre les images sur les supports d'enregistrement par éjection de gouttelettes d'encre à partir d'une tête d'enregistrement.

3. Encre d'enregistrement selon la revendication 1, dans laquelle le groupe anionique comprend un groupe carboxyle.

4. Encre d'enregistrement selon la revendication 1, dans laquelle le diamètre de particule moyen en volume du colorant est de 10 nm à 300 nm.

5. Encre d'enregistrement selon l'une quelconque des revendications 1 à 4, dans laquelle le tensioactif est au moins un parmi les tensioactifs anioniques, les tensioactifs non ioniques, les tensioactifs ampholytiques et les tensioactifs contenant du fluor.

6. Encre d'enregistrement selon la revendication 5, dans laquelle le tensioactif est au moins parmi les tensioactifs anioniques choisis parmi les acétates d'éther alkylique de polyoxyéthylène et les sulfosuccinates de dialkyle.

7. Encre d'enregistrement selon la revendication 5, dans laquelle le tensioactif est au moins parmi les tensioactifs non ioniques choisis parmi les acétylènes glycols, les éthers alkyliques de polyoxyéthylène, les éthers alkylphényliques de polyoxyéthylène et les copolymères de polyéthylènepolypropylène.

8. Encre d'enregistrement selon l'une quelconque des revendications 1 à 7, dans laquelle l'humidifiant est choisi parmi la glycérine, l'éthylène glycol, le diéthylène glycol, le triéthylène glycol, le propylène glycol, le dipropylène glycol, le tripropylène glycol, le 1,3-butanediol, le 2,3-butanediol, le 1,4-butanediol, le 1,5-pentanediol, le tétraéthylène glycol, le 1,6-hexanediol, le 2-méthyl-2,4-pentanediol, le polyéthylène glycol, le 1,2,4-butanetriol, le 1,2,6-hexanetriol, le thiodiglycol, la 2-pyrrolidone, la N-méthyl-2-pyrrolidone, la N-hydroxyéthyl-2-pyrrolidone et la 1,3-diméthylimidazolidinone.

9. Encre d'enregistrement selon l'une quelconque des revendications 1 à 8, dans laquelle l'agent mouillant est au moins un parmi les composés diols et les éthers alkyliques ayant 6 atomes de carbone ou plus dans les molécules respectives.

10. Encre d'enregistrement selon la revendication 9, dans laquelle les composés diols sont le 2-éthyl-1,3-hexanediol et le 2,2,4-triméthyl-1,3-pentanediol.

11. Encre d'enregistrement selon la revendication 9, dans laquelle les éthers alkyliques sont l'éther monohexylique de diéthylène glycol et l'éther monohexylique de propylène glycol.

12. Encre d'enregistrement selon l'une quelconque des revendications 1 à 11, dans laquelle au moins une parmi les résines solubles et les émulsions de résine est incorporée dans l'encre d'enregistrement.

13. Encre d'enregistrement selon l'une quelconque des revendications 1 à 12, dans laquelle la viscosité de l'encre d'enregistrement est de 1 mPa·s à 20 mPa·s à 25 °C.

14. Encre d'enregistrement selon l'une quelconque des revendications 1 à 12, dans laquelle la tension de surface de l'encre d'enregistrement est inférieure ou égale à 50 mN/m.

15. Encre d'enregistrement selon l'une quelconque des revendications 1 à 14, dans laquelle l'encre d'enregistrement est au moins une parmi les encres cyan, les encres magenta, les encres jaunes et les encres noires.

16. Cartouche d'encre, dans laquelle la cartouche d'encre est formée par encapsulation de l'encre d'enregistrement selon l'une quelconque des revendications 1 à 15 dans un contenant.

17. Appareil d'enregistrement à jet d'encre comprenant une unité d'éjection de gouttelettes d'encre configurée pour éjecter des gouttelettes d'encre pour former des images sur des supports d'enregistrement par stimulation de l'encre d'enregistrement selon l'une quelconque des revendications 1 à 15.

18. Appareil d'enregistrement à jet d'encre selon la revendication 17, dans laquelle la stimulation est générée au moyen d'au moins un parmi un chauffage, une pression, une vibration et un rayonnement.

19. Appareil d'enregistrement à jet d'encre selon l'une quelconque des revendications 17 et 18, dans lequel l'appareil d'enregistrement à jet d'encre comprend une unité de transport équipée d'un mécanisme d'inversion configuré pour inverser un support d'enregistrement de sorte à faire que le second côté d'enregistrement du support d'enregistrement puisse être enregistré après l'enregistrement sur le premier côté d'enregistrement du support d'enregistrement.

20. Appareil d'enregistrement à jet d'encre selon la revendication 19, dans lequel l'unité de transport comprend une courroie de transport qui utilise la force électrostatique.

21. Appareil d'enregistrement à jet d'encre selon la revendication 20, dans laquelle la courroie de transport est chargée par application d'une polarisation magnétique par courant alternatif de ± 1,2 kV à ± 2,6 kV à un rouleau de chargement.

22. Appareil d'enregistrement à jet d'encre selon la revendication 19, dans lequel l'unité de transport est configurée pour utiliser l'air évacué afin de maintenir les supports d'enregistrement.

23. Appareil d'enregistrement à jet d'encre selon l'une quelconque des revendications 21 et 22, dans lequel la courroie de transport adsorbe le support d'enregistrement par une force supérieure ou égale à 15 N.

24. Appareil d'enregistrement à jet d'encre selon la revendication 19, dans laquelle l'unité de transport comprend un ou plusieurs rouleaux de transport de papier et un ou plusieurs rouleaux de déchargement de papier.

25. Appareil d'enregistrement à jet d'encre selon l'une quelconque des revendications 17 à 24, dans lequel un réservoir secondaire est placé en un site au-dessus d'une tête d'enregistrement afin d'alimenter une encre vers la tête d'enregistrement, et l'encre est alimentée d'une cartouche d'encre vers le réservoir secondaire par le biais d'un tube d'alimentation.

26. Procédé d'enregistrement à jet d'encre comprenant la stimulation de l'encre d'enregistrement selon l'une quelconque des revendications 1 à 15, l'éjection de gouttelettes d'encre et la formation d'images.

27. Procédé d'enregistrement à jet d'encre selon la revendication 26, dans lequel la stimulation est générée au moins d'au moins un parmi un chauffage, une pression, une vibration et un rayonnement.

28. Matière enregistrée comprenant une image, formée à partir de l'encre d'enregistrement selon l'une quelconque des revendications 1 à 15, sur un support d'enregistrement.
